# EUROPEAN PATENT SPECIFICATION

(11) **EP 2 871 817 B1**
(45) Date of publication and mention of the grant of the patent: **26.12.2018**
(21) Application number: 13813949.8
(22) Date of filing: 05.07.2013
(51) Int. Cl.: H04L 12/911, H04L 29/08

(54) **COMBINED CLOUD STORAGE DISK CLIENT, SERVER AND SYSTEM, AND COMBINED CLOUD STORAGE DISK SERVICE SERVING METHOD**
CLIENT EINER KOMBINIERTEN CLOUD-SPEICHERPLATTE, SERVER UND SYSTEM SOWIE BEREITSTELLUNGSVERFAHREN FÜR DEN DIENST EINER KOMBINIERTEN CLOUD-SPEICHERPLATTE
CLIENT DE DISQUE DE STOCKAGE DANS LE NUAGE COMBINÉ, SERVEUR ET SYSTÈME, ET PROCÉDÉ DE DESSERTE DE SERVICE DE DISQUE DE STOCKAGE DANS LE NUAGE COMBINÉ

(30) Priority: 06.07.2012 CN 201210233910
(43) Date of publication of application: 13.05.2015
(73) Proprietor: ZTE Corporation, Shenzhen, Guangdong 518057 (CN)
(72) Inventor: SHAO, Weixiang, Shenzhen Guangdong 518057 (CN)
(74) Representative: Lavoix
(86) International application number: PCT/CN2013/078929
(87) International publication number: WO 2014/005552

(56) References cited:
- CN-A- 1 499 402
- CN-A- 101 908 077
- CN-A- 102 143 188
- US-A1- 2011 022 642
- US-A1- 2011 178 831
- US-A1- 2011 239 120

## Description

### TECHNICAL FIELD

The present disclosure relates to the field of networks and communications, and in particular to a united cloud disk client, server, system and a united cloud disk serving method.

### BACKGROUD

As the development of cloud computing technology, existing cloud disks (also referred to as network hard disks, cloud end hard disks or online cloud storage) can provide file hosting services for file deposition and file upload/download services, most of them are network services similar to FTPs plus simple upload/download functionality for the purpose of facilitating users to access files, and most of operators declare that cloud disks provided by themselves can replace portable HDDs and USB drives. Generally, files are stored in a local disk, their mobility is poor and thus it's not convenient to share them. In contrary, cloud disks are superior in this aspect. Since files are stored in servers of service providers, anybody can access the files through the Internet at any places in any time. If a network transmission rate used is high, it feels as if a local disk is used. Free cloud disks have relatively small spaces available and there are typically restrictions on file size, download rate, storage duration and the like; paid cloud disks can provide large-volume spaces and there are no restrictions on file size, download rate, storage duration and format.

At present cloud disks can provide users with cloud storage spaces, the users can upload local data (it is mainly in the form of files and can also be in the form of data blocks) to the cloud storage spaces by using browsers or client softwares. The users can implement operations such as upload, deletion, sharing, browsing and the like. After users select data desired to be uploaded, connections to servers are established, the servers allocate storage spaces to data uploaded by the users, receive complete data uploaded by the users through network connections and store the complete data in the allocated storage spaces.

Existing cloud disks are implemented based on a cloud computing and storage platform (or network computing and storage platform) owned by a service provider or implemented through hired cloud storage services (or network storage services) of specific service provides. Generally, when users request for cloud disk or file services, they can only access service providers registered by themselves and can't access those unregistered.

By storing data to cloud disks, users get out of troubles with retaining the data, but they lose control of the data at the same time, thus what followed are unknown security dangers such as cloud outages. There are currently two solutions, one is backing up key data by a user himself/herself; the other is selecting a series of service providers to host working loads, i.e., selecting one or two of them as reserved service provides and another one as a primary service provider, then the user deploys data to different service providers in a secure mode and implements services for a disaster recovery purpose based on his/her own solutions. These two solutions make troubles for the user, backing up by the user himself/herself costs a lot and can't ensure reliability, and the user himself/herself needs to ensure data consistency when different service providers are used, thus automatic inter-service-provider services can't be implemented, such as data copying, data deletion, data backing up and the like; expenditures are main problem for individual users while data reliability and consistency are main problems for enterprise users.

### SUMMARY

The present disclosure is intended to provide a united cloud disk client, server, system and a united cloud disk serving method capable of implementing united cloud disk services.

In order to solve above technical problems, the present disclosure provides a united cloud disk system that includes a principal service provider and a third party service provider, wherein the principal service provider includes a united cloud disk server and storage resources.

The united cloud disk server is configured to process a cloud disk service request transmitted by a united cloud disk client, an application, a third party engine or the third party service provider and call the storage resources of the principal service provider and/or the third party service provider to provide united cloud disk services;
the storage resources are configured to be called by the united cloud disk server to access data; and
the third party service provider comprises a united cloud disk third party service provider and a non-united cloud disk third party service provider and is configured to be called by the united cloud disk server.

The united cloud disk system may further include a third party engine, and the third party engine includes a network engine or service system that provides services or network resources, services or capabilities; accordingly, the united cloud disk server may be further configured to call the third party engine according to the cloud disk service request;
the third party engine may be configured to be called by the united cloud disk server;
the third party engine may include at least one of: an address book system, a network anti-virus system, a network file editing system, a network mail system, an SMS system, an MMS system, an IM system, a WeChat system, a blog system, a microblog system, an advertising system or an enterprise application system.

The united cloud disk system may further include at least one of: an interface between the storage resources and the united cloud disk server, an interface between the united cloud disk third party service provider and the united cloud disk server or an interface between the non-united cloud disk third party service provider and the united cloud disk server.

The united cloud disk system may further include at least one of: an interface between the untied cloud disk client and the united cloud disk server, an interface between the application and the united cloud disk server, an interface between the third party engine and the united cloud disk server or interfaces between other united cloud disk servers and the united cloud disk server.

Each interface may provide at least one of the following functions: authentication, authorization, identifier management operation, account management operation, file service operation, object service operation, block service operation, notification, request or response.

In order to solve above technical solutions, the present disclosure further provides a united cloud disk server that includes at least one of an identifier management module, an account management module, a file service module, an object service module and a block service module, wherein
the identifier management module is configured to manage user identifiers;
the account management module is configured to manage metadata or attribution information of at least one of the following user accounts: a tenant account, a tenant sub-user account or a consumer user account;
the file service module is configured to provide management and/or usage of a directory or file;
the object service module is configured to provide management and/or usage of a container or object; and
the block service module is configured to provide management and/or usage of a data block.

Metadata or attribution information of the tenant account may include at least one of: a tenant primary account identifier, a tenant primary account password, a tenant primary account token, a tenant secondary account identifier, a tenant secondary account password, a tenant secondary account token, a tenant charging plan, a third party service provider list, a cloud disk free allowance of a principal service provider, a cloud disk free allowance of a third party service provider, a charging allowance of the principal service provider, a charging allowance of the third party service provider, supported service functions, principal service provider strategies, third party service provider strategies, Service Level Agreements (SLAs), Quality of Service (QoS) requirements, a tenant sub-user account list, tenant strategies or tenant administrator interface view configurations;
metadata or attribution information of the tenant sub-user account may include at least one of: a tenant sub-user primary account identifier, a tenant sub-user primary account password, a tenant sub-user primary account token, a tenant sub-user secondary account identifier, a tenant sub-user secondary account password, a tenant sub-user secondary account token, tenant sub-user interface view configurations, a third party service provider list, a cloud disk allowance of a principal service provider, a cloud disk allowance of a third party service provider, supported service functions, tenant sub-user preferences, tenant strategies, access modes or supported terminal types; and
metadata or attribution information of the consumer user account may include at least one of: a consumer user primary account identifier, a consumer user primary account password, a consumer user primary account token, a consumer user secondary account identifier, a consumer user secondary account password, a consumer user secondary account token, consumer user interface view configurations, a consumer user charging plan, a third party service provider list, a cloud disk free allowance of a principal service provider, a cloud disk free allowance of a third party service provider, a charging allowance of the principal service provider, a charging allowance of the third party service provider, supported service functions, user preferences, principal service provider strategies, third party service provider strategies, SLAs, QoS requirements, access modes or supported terminal types.

At least one of the file service module, the object service module or the block service module may be further configured to back up data stored in a file, object or block by using any one of the following modes:
mode 1, data stored by the principal service provider is copied to storage resources provided by at least two other different third party service providers or the data is copied to two other different physical locations of the principal service provider when there are no third party service providers so as to retain at least one piece of original data and two copies;
mode 2, the data is copied to storage resources provided by at least three different third party service providers or the data is then copied to the principal service provider when there are no third party service providers so as to retain at least one piece of original data and two copies;
mode 3, the data stored by the principal service provider is copied to storage resources provided by at least one other third party service provider or the data is copied to another physical location of the principal service provider when there are no third party service providers so as to retain at least one piece of original data and one copy;
mode 4, the data is stored to storage resources provided by at least two different third party service providers or the data is copied to the principal service provider when there are no third party service providers so as to retain at least one piece of original data and one copy; or
mode 5, at least one piece of original data and one copy are stored at different physical locations of the principal service provider.

Providing management of a file by the file service module may include: the file service module manages metadata or attribution information of the file; the metadata or attribution information of the file may include at least one of: file name, file identifier, file type, file display mode, file playing mode, file description, file permission, file size, check code, file creation date, file modification date, file last read date, file icon, file resource links of a principal service provider, file resource links of a third party service provider, or file owner.

The file may include a large file, accordingly, the providing management of a file by the file service module may include: the file service module provides management of metadata or attribution information of the large file;the large file may be a file larger than a predetermined size; the metadata or attribution information of the large file may include at least one of: file name, file identifier, file type, file display/playing mode, file description, file permission, file size, check code, file creation date, file modification date, file last read date, file icon, file owner or large file fragmentation index;
providing management of a directory by the file service module may include: the file service module manages metadata or attribution information of the directory; the metadata or attribution information of the directory may include at least one of: directory name, directory identifier, directory permission, directory space, parent directory list, child directory list or file list.

Providing management of an object by the object service module may include: the object service module manages metadata or attribution information of the object; the metadata or attribution information of the object may include at least one of: object name, object identifier, object type, object description, object permission, object size, check code, object interface mode, object value, object creation date, object modification date, object last read date, object resource links of a principal service provider, object resource links of a third party service provider, or object owner;
providing management of a container by the object service module may include: the object service module manages metadata or attribution information of the container;the metadata or attribution information of the container may include at least one of: container name, container identifier, container permission, container space, parent container list, child container list or object list.

Providing management of a data block by the block service module may include: the block service module manages metadata or attribution information of the block;the metadata or attribution information of the block comprises at least one of: block identifier, block description, block permission, block size, check code, block interface mode, block creation date, block modification date, block last read date, block resource links of a principal service provider, block resource links of a third party service provider, or block owner.

In order to solve above technical problems, the present disclosure further provides a united cloud disk serving method, and the method includes:
a united cloud disk server receives a cloud disk service request transmitted by a united cloud disk client, an application, a third party engine or a third party service provider; and
the united cloud disk server processes the cloud disk service request and calls storage resources of the principal service provider and/or the third party service provider to provide united cloud disk services.

The method may further include: the united cloud disk server calls, according to the cloud disk service request, services or network resources, services or capabilities of a third party engine.
the united cloud disk services may include at least one of: account services, directory services, folder services, container services, file services, object services, block services, sharing, online playing, offline download, upload/download by non-cloud disk users or searching.

In order to solve above technical problems, the present disclosure further provides a united cloud disk client that includes at least one of: a request transmission module, a response or notification module and an interface module, wherein
the request transmission module is configured to transmit a cloud disk service request to a united cloud disk server;
the response or notification module is configured to receive a response or notification from the united cloud disk server; and
the interface module is configured to, depending on user objects, provide corresponding cloud disk service interface views through which third party service providers are implicitly or explicitly displayed.

The united cloud disk client may include at least one of: a web browser, a mobile phone browser, a mobile terminal browser, a computer client software, a netbook client software, a smart phone client software, a mobile terminal client software, an interactive TV client software, an STB client software, an IPTV terminal client software, a thin client, a virtual desktop client, or a terminal equipment or client supporting cloud disk services.

The present disclosure can implement united cloud disk services, and can also implement cloud disk data backing up in an inter-service-provider mode for a disaster recovery purpose.

### BRIEF DESCRIPTION OF THE DRAWINGS

The accompanying drawings illustrated herein are used to provide further understanding of the present disclosure and constitute a part of the present disclosure, and illustrative embodiments of the present disclosure and their description are used to explain the present disclosure instead of constituting improper limitation to the present disclosure. Wherein
Fig. 1 is a schematic diagram showing an architecture of a united cloud disk system according to an embodiment of the present disclosure;
Fig. 2 is a schematic diagram showing steps for implementing united cloud disk services according to an embodiment of the present disclosure;
Fig. 3 is a schematic diagram showing creation of an account (local domain account) by a user according to an embodiment of the present disclosure;
Fig. 4 is a schematic diagram showing creation of an account (coalition account) by a user according to an embodiment of the present disclosure;
Fig. 5 is a schematic diagram showing creation of an account (third party service provider account) by a user according to an embodiment of the present disclosure;
Fig. 6 is a schematic diagram showing file services according to an embodiment of the present disclosure;
Fig. 7 is a schematic diagram showing large file services according to an embodiment of the present disclosure;
Fig. 8 is a schematic diagram showing calling service capabilities of a third party engine according to an embodiment of the present disclosure;
Fig. 9 is a schematic diagram showing united charging of a coalition account according to an embodiment of the present disclosure; and
Fig. 10 is a schematic diagram showing charging of a local domain account and a third party service provider account according to an embodiment of the present disclosure.

### DETAILED DESCRIPTION

The present disclosure is intended to provide a united cloud disk client, server, system and method that can implement united cloud disk services and can also implement cloud disk data backing up in a inter-service-provider mode for a disaster recovery purpose so as to solve above problems that a single cloud disk service is used to avoid cloud outages, multiple cloud disk service are used but automatic and inter-service-provider services can't be implemented and efficiencies thereof are low.

In the present disclosure, a united cloud disk system includes a principal service provider and a third party service provider for providing united cloud disk services, and the principal service provider includes one or more united cloud disk servers and one or more storage resources that can be distributed in different nodes. The third party service provider refers to other providers providing cloud disk services, which include united cloud disk third party service providers and non-united cloud disk third party service providers; wherein the united cloud disk third party service providers refer mainly to other service providers that include united cloud disk servers and that can also provide united cloud disk services; the non-united cloud disk third party service providers refer mainly to other service providers that don't include united cloud disk servers but provide cloud disk services, cloud storage services or resources. The third party service provider may be one of: a mobile or telecommunication operator, an Internet operator, a cloud service provider or a service provider.

The cloud disk system, the system, the domain and the united cloud disk system may refer generally to a same system.

The present disclosure provides a new united cloud disk system, also referred to as a network hard disk system, a cloud end hard disk system or an online cloud storage system, which includes: a united cloud disk server, storage resources and a third party service provider; wherein the united cloud disk server is configured to process a cloud disk service request transmitted by a united cloud disk client, an application, a third party engine or the third party service provider and call the storage resources and/or the third party service provider to provide united cloud disk services; the storage resources are configured to be called by the united cloud disk server to access data; and the third party service provider comprises a united cloud disk third party service provider and a non-united cloud disk third party service provider and is configured to be called by the united cloud disk server. Preferably, the united cloud disk system further includes a third party engine that may be a network engine or service system providing services or network resources, services or capabilities. Interfaces in the system include at least one of: an interface between the storage resources and the united cloud disk server, an interface between the united cloud disk third party service provider and the united cloud disk server or an interface between the non-united cloud disk third party service provider and the united cloud disk server. The system further include at least one of: an interface between the untied cloud disk client and the united cloud disk server, an interface between the application and the united cloud disk server, an interface between the third party engine and the united cloud disk server or interfaces between other united cloud disk servers and the united cloud disk server.

The present disclosure further provides a new method for implementing a united cloud disk, which includes: a united cloud disk server receives a cloud disk service request transmitted by a united cloud disk client, an application, a third party engine or a third party service provider; and the united cloud disk server processes the cloud disk service request and calls storage resources and/or cloud disks of the third party service provider to provide united cloud disk services.

It can be seen from above that the united cloud disk server can call a third party service provider and it can also be called by the third party service provider to provide united cloud disk services.

Preferably, the united cloud disk server can further call resources, services or capabilities of a third party engine.

The present disclosure further provides a new united cloud disk server that includes at least one of an identifier management module, an account management module, a file service module, an object service module and a block service module.

The present disclosure further provides a united cloud disk client that includes at least one of: a request transmission module, a response or notification module and an interface module, wherein

The present disclosure will be elaborated below with reference to accompanying drawings in combination with embodiments. It should be noted that embodiments of the present disclosure and features in the embodiments can be combined with each other in case of no conflicts.

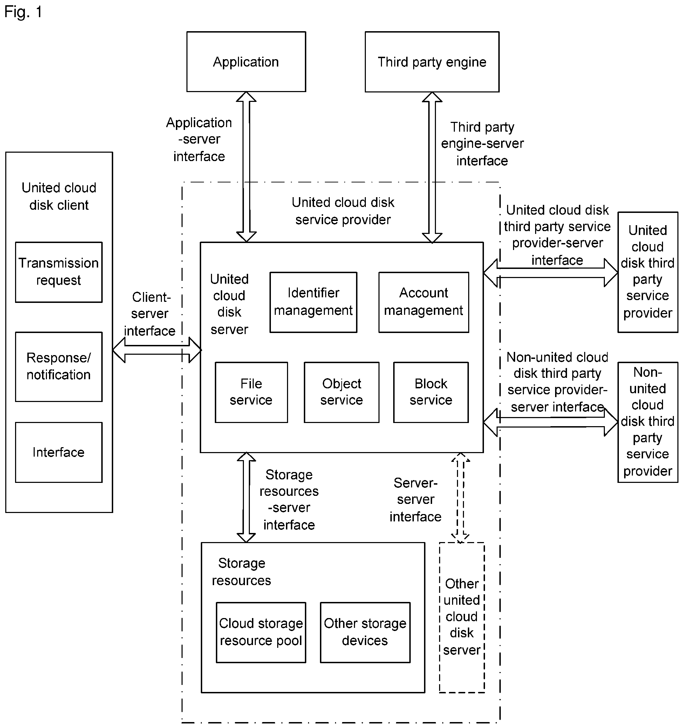

Referring to Fig. 1, it shows a schematic diagram of an architecture of a united cloud disk system according to an embodiment of the present disclosure.

The system is implemented based on distributed file techniques and distributed cache techniques.

Herein, the distributed file techniques are different from techniques that manage only local disks implemented in a common file system since in the distributed file techniques both file contents and directories are not stored in local disks but transmitted to different nodes on a distal end through networks. In the distributed file techniques, files are stored by data blocks the sizes of which are configurable, and a same file is not stored in only one machine but stored in a group of machines in a distributed mode such that services are collaboratively provided. Through file copies and slice storage, data reliability in a node grade and automatic load balancing within a file system can be implemented, and the capacity and throughout of a cloud storage system can be linearly extended. In the embodiment, the distributed file techniques are mainly used to store content data of users.

The distributed cache techniques are techniques through which in-memory caches are deployed in a distributed manner and caching spaces of multiple machines are integrated into a unified in-memory caching space so as to implement massive extensible in-memory caches. The distributed cache techniques perform processing based on key values and support small-capacity data well, there are no concepts of files and directories, storage of massive data can be supported and ten thousands of concurrent requests can be readily supported. In the present disclosure, the distributed cache techniques are mainly used to store system data (identifier information and account information) of users and files, data blocks or fragments desired to be frequently accessed.

In the present disclosure, a user object includes at least one of a tenant, a tenant sub-user or a consumer user. Specifically, the tenant refers to an enterprise user or a group user, the tenant includes its sub-users, and a tenant administrator can mange tenant sub-users.

A user can access a united cloud disk server through a united cloud disk client or an application, a user of a third party service provider can also access the united cloud disk server, a third party engine can also access the united cloud disk server; the united cloud disk client is a terminal unit that provides users with accesses to a united cloud disk server, and it includes at least one of a browser (including at least one of a network browser, a mobile phone browser, a mobile terminal browser or the like), a software installed in a terminal (including at least one of a computer client software, a netbook client software, a smart phone client software, a mobile terminal client software, an interactive TV client software, an STB client software, an IPTV terminal client software or the like), or a cloud terminal (including at least one of a thin client, a virtual desktop client, or other terminal equipments or clients supporting accessing cloud disk services). The application includes at least one of a personal application, an enterprise application, an office automation application, a customer relationship management application, a widget application or other third party applications. The third party service provider includes a united cloud disk third party service provider and/or a non-united cloud disk third party service provider. The third party engine is a network engine or service system that provides various services, network resources, services or capabilities, and it includes at least one of: an address book system, a network anti-virus system, a network file editing system, a network mail system, an SMS system, an MMS system, an IM system, a WeChat system, a blog system, a microblog system, an advertising system or an enterprise application system.

The united cloud disk client includes at least one of a request transmission module, a response or notification module and an interface module, wherein
the interface module provides corresponding cloud disk service interface views depending on user objects, and it includes at least one of a tenant administrator interface view, a tenant sub-user interface view or a consumer user interface view;
herein the cloud disk service interface views can display implicitly or explicitly third party service providers. Without leaking user's private information, the system can determine whether accounts of other third party service providers are created automatically for a user according to factors such as strategies, user preferences, SLA, QoS requirements and the like, and then the cloud disk service interface view uses an implicit display of third party service providers. When the system acquires certain storage resources of other third party service providers as its public resources, the system can also allocate a part of the storage resources of other third party service providers to the user, and then the cloud disk service interface view uses an implicit display of third party service providers. The user can also determine according to system prompts whether accounts of other third party service providers are created, or the user inputs an existing account of a third party service provider, and then the cloud disk service interface view uses an explicit display of third party service providers. When the implicit display of third party service providers is used, a service provider combines storage resources of a principal service provider with storage resources or services of the third party service providers so as to display a unified interface to the user, such as a unified root directory or a drive letter of a network HDD; they may be multiple root directories or multiple drive letters of network HDDs, with only a principal service provider identifier displayed. When the explicit display of third party service providers is used, multiple root directories or multiple drive letters of network HDDs are displayed to the user with each root directory or each network HDD displaying a related service provider identifier.

The tenant administrator interface view is mainly used to manage tenants, and the content to be managed includes at least one of tenant resource space information, tenant sub-user information, tenant strategy configurations, tenant logs and reports or the like.

The tenant sub-user interface view is mainly for management and/or usage of united cloud disk services by a tenant sub-user. Generally, a tenant uses root directories, a sub-user its corresponding subdirectories, and the sub-user can create new subdirectories under existing subdirectories.

The consumer user interface view is mainly for management and/or usage of united cloud disk services by a consumer user.

The request transmission module is configured to transmit a cloud disk service request to a united cloud disk server;
the response or notification module is configured to receive a response or notification from the united cloud disk server.

Data synchronization can be implemented between a united cloud disk client and a united cloud disk server, and the synchronization includes active synchronization and passive synchronization. Specifically, the active synchronization refers to: the united cloud disk client actively or firstly initiates a synchronization request to the united cloud disk server, the united cloud disk server compares data and returns latest data; while the passive synchronization refers to: the united cloud disk server firstly pushes latest data or transmits a updating notification to the united cloud disk client, and then the united cloud disk client initiates a synchronization request to the united cloud disk server, and the united cloud disk server returns latest data.

The united cloud disk system includes at least one of: a client-server interface (i.e., an interface between the united cloud disk client and the united cloud disk server), an application-server interface (i.e., an interface between a third party application and the united cloud disk server), a third engine-server interface (i.e., an interface between the third party engine and the united cloud disk server), a storage resources-server interface (i.e., an interface between storage resources of the principal service provider and the united cloud disk server), a server-server interface (i.e., interfaces between multiple united cloud disk servers on the principal service provider side), a united cloud disk third party service provider-server interface (i.e., an interface between the united cloud disk server and a united cloud disk server of the united cloud disk third party service provider), or a non-united cloud disk third party service provider-server interface (i.e., an interface between the non-united cloud disk third party service provider and the united cloud disk server).

Each of various interfaces includes a unidirectional interface (i.e., an interface connected to a server) and/or a reverse interface. Each of various interfaces provides at least one of the following functions: authentication, authorization, identifier management operation, account management operation, file service operation, object service operation, block service operation, notification, request or response. Each of various interfaces includes at least one of a united cloud disk Application Program Interface (API) (i.e., an open API of the system), a standard API, a third party service provider interface or API, a third party engine interface or API, or a command line. Each of various interfaces or APIs is based on at least one of following protocols or techniques: Hypertext Transfer Protocol (HTTP), Simple Object Access Protocol (SOAP), Representational State Transfer (REST), FTP, Network File System (NFS), Common Internet File System (CIFS), Web Distributed Authoring and Versioning (WebDAV), Portable Operating System Interface (POSIX), Storage Management Initiative Specification (SMI-S) of the Storage Networking Industry Association (SNIA), Fibre Channel (FC), Internet Small Computer System Interface (iSCSI), Fibre Channel over Ethernet (FCoE), Logic Unit Number (LUN), Object-based Storage Device (OSD) command or the like. The standard API supports at least one of: a Cloud Data Management Interface (CDMI) of SINA, an Openstack object-based storage API or the like; the third engine interface or API supports at least one of: an address book system interface or API, a network anti-virus system interface or API, a network file editing system interface or API, a network mail system interface or API, an SMS system interface or API, an MMS system interface or API, an IM system interface or API, a WeChat system interface or API, a blog system interface or API, a microblog system interface or API, an advertising system interface or API, an enterprise application integration system interface or API or the like.

The united cloud disk server includes at least one of an identifier management module, an account management module, a file service module, an object service module and a block service module.

The identifier management module is configured to manage user identifier information to implement authentication and authorization of users. Users are identified through accounts in the principal service provider.

The account management module is configured to manage account information of users and specifically manage metadata or attribution information of at least one of the following user accounts: a tenant account, a tenant sub-user account or a consumer user account. Herein the metadata and the attribution information have the same meaning.

The cloud disk system supports at least one of the following accounts: a local domain account, a coalition account or a third party service provider account. A user can use a combination of the three accounts (any one, any two or all three of them), the user sets one of the three accounts as a primary account and other accounts as a secondary account, and there may be multiple secondary accounts.

The local domain account refers to an account whose account information is generated by using a user identification method of the principal service provider; the coalition account refers to an account whose coalition user information is authenticated by an identifier provider and authorized by the principal service provider, the coalition members include the principal service provider and other third party service providers; the third party service provider account refers to an account whose account information is generated by using directly user identifiers of a third party service provider, and the principal service provider needs to support capabilities of accessing the third party service provider and verifies validity and effectiveness of the third party service provider account.

An account service operation includes at least one of: creating an account, adding an account, deleting an account, reading an account or modifying an account.

The cloud disk system supports at least one of below account objects: a tenant account, a tenant sub-user account or a consumer user account.

The account management module manages (reads or writes) metadata or attribution information of an account.

Specifically, metadata or attribution information of the consumer user account comprises at least one of: a consumer user primary account identifier, a consumer user primary account password, a consumer user primary account token, a consumer user secondary account identifier, a consumer user secondary account password, a consumer user secondary account token, consumer user interface view configurations, a consumer user charging plan, a third party service provider list, a cloud disk free allowance of a principal service provider, a cloud disk free allowance of a third party service provider, a charging allowance of the principal service provider, a charging allowance of the third party service provider, supported service functions, user preferences, principal service provider strategies, third party service provider strategies, SLAs, QoS requirements, access modes or supported terminal types.

Specifically, metadata or attribution information of the tenant account comprises at least one of: a tenant primary account identifier, a tenant primary account password, a tenant primary account token, a tenant secondary account identifier, a tenant secondary account password, a tenant secondary account token, a tenant charging plan, a third party service provider list, a cloud disk free allowance of a principal service provider, a cloud disk free allowance of a third party service provider, a charging allowance of the principal service provider, a charging allowance of the third party service provider, supported service functions, principal service provider strategies, third party service provider strategies, Service Level Agreements (SLAs), Quality of Service (QoS) requirements, a tenant sub-user account list, tenant strategies or tenant administrator interface view configurations.

Specifically, metadata or attribution information of the tenant sub-user account comprises at least one of: a tenant sub-user primary account identifier, a tenant sub-user primary account password, a tenant sub-user primary account token, a tenant sub-user secondary account identifier, a tenant sub-user secondary account password, a tenant sub-user secondary account token, tenant sub-user interface view configurations, a third party service provider list, a cloud disk allowance of a principal service provider, a cloud disk allowance of a third party service provider, supported service functions, tenant sub-user preferences, tenant strategies, access modes or supported terminal types.

Further, the united cloud disk server processes and implements a united cloud disk service request. Specifically, the united cloud disk server receives and parses a cloud disk service request through an interface, arranges a service flow implements a service operation and accesses data, and the data can be stored in a principal service provider or a third party service provider. The united cloud disk server can call (or adapt) resources or services of the third party service provider through an interface, and/or call resources, services or capabilities of a third party engine through an interface. When the principal service provider has multiple united cloud disk servers, a united cloud disk server thereof can also call other united cloud disk servers. In addition, the third party service provider or the third party engine can also call a united cloud disk server.

The united cloud disk services comprise at least one of: account services, directory services, folder services, container services, file services, object services, block services, sharing, online playing, offline download, upload/download by non-cloud disk users, searching or the like.

Through calling a third party engine or being called by the third party engine, the system or the third party engine can support at least one of the following cloud disk value-added services: calling address book to acquire address information, providing an address book system with address data services, calling a network anti-virus system to search and kill viruses, providing the network anti-virus system with virus data services, calling a network file editing system to edit files on line, providing the network file editing system with network file data services, calling a network mail system to send mails, providing the network mail system with mail data services, calling an SMS system to send short messages, providing the SMS system with SMS data service, calling an MMS system to send multimedia messages, providing the MMS system with MMS data services, calling an IM system to send instant messages, providing the IM system with IM data services, calling a WeChat system to send messages, providing the WeChat system with WeChat data services, calling a blog system to subscribe social networking files or issue social networking files, providing the blog system with blog data services, calling a microblog system to subscribe social networking files or issue social networking files, providing the microblog system with microblog data services and enterprise application integration or the like.

Most basic and core services provided by a united cloud disk server is management and/or usage of user data, i.e., an adding, deleting, reading and writing operation of data. The user data is namely content data of a user in the system, mainly in forms of a file, a data block (the data block can be regarded as a binary file) or an object (the object includes a basic storage entity, i.e., content data, and metadata or attribution information, and the object is stored in a file system in the form of a binary file while the metadata is stored in the form of a file's extended attribute), which is stored in storage resources of a principal service provider (including at least one of a cloud storage resource pool, other storage devices or the like) or stored in storage resources of a third party service provider (including at least one of storage resources of the third party service provider, network storage resources or other traditional storage resources).

The united cloud disk server supports at least one of the following user data services: file services, object services or block services.

The file service module provides management and/or usage of a directory or file, the directory may also be a folder and files are placed in the directory; the file includes a common file and/or large file, specifically, a file having a size smaller than a predetermined size is namely a common file while the large file refers to a file whose size exceeds a certain limit, i.e., larger than the predetermined size such as a file larger than 5G; all of the directory, the file and the large file support inter-service-provider operations. It is supported to access file services through at least one of the following protocols or techniques: united cloud disk API, FTP, NFS, CIFS, WebDAV, POSIX or the like.

The object service module provides management and/or usage of a container or object, objects are placed in the container, and both the container and the object support inter-service-provider operations. It is supported to access object services through at least one of the following protocols or techniques: united cloud disk API, Object-based Storage Device (OSD) command, SNIA CDMI, Openstack object-based storage API, AMAZON S3 API or the like.

The block service module provides management and/or usage of a data block, and the block supports inter-service-provider operations. It is supported to access block services through at least one of the following protocols or techniques: united cloud disk API, SNIA SMI-S, FC, iSCSI, FCoE, LUN or the like.

Particularly, identification information and account information of a user belong to system data which is preferably stored in various functional modules or storage resources of a principal service provider instead of being stored in storage resources of a third party service provider.

In order to avoid key data from being lost, the key data or data fragments need to be backed up, i.e., multiple copies are duplicated, the system can use one of the following backing up strategies or modes:
mode 1, data stored by the principal service provider is copied to storage resources provided by at least two other different third party service providers or the data is copied to two other different physical locations of the principal service provider when there are no third party service providers so as to retain at least one piece of original data and two copies; specifically, the original data and copies are distributed in storage resources of at least three different service providers with one piece of them being distributed in storage resources of a principal service provider, when one service provider is not accessible, the system copies the data to storage resources of a further new third party service provider, or when there isn't a new third party service provider, the system copies the data to storage resources of the principal service provider and it is ensured that a data copy is located in a physical location different from an original one;
mode 2, the data is copied to storage resources provided by at least three different third party service providers or the data is then copied to the principal service provider when there are no third party service providers so as to retain at least one piece of original data and two copies; specifically, the original data and copies are distributed in storage resources of at least three different third party service providers without being distributed in storage resources of a principal service provider, when one service provider is not accessible, the system copies the data to storage resources of a further new third party service provider, or when there isn't a new third party service provider, the system copies the data to storage resources of the principal service provider;
mode 3, the data stored by the principal service provider is copied to storage resources provided by at least one other third party service provider or the data is copied to another physical location of the principal service provider when there are no third party service providers so as to retain at least one piece of original data and one copy; specifically, the original data and copies are distributed in storage resources of at least two different third party service providers with one piece of them being distributed in storage resources of a principal service provider, when one service provider is not accessible, the system copies the data to storage resources of a further new third party service provider, or when there isn't a new third party service provider, the system copies the data to storage resources of the principal service provider and it is ensured that a data copy is located in a physical location different from an original one;
mode 4, the data is stored to storage resources provided by at least two different third party service providers or the data is copied to the principal service provider when there are no third party service providers so as to retain at least one piece of original data and one copy; specifically, the original data and copies are distributed in storage resources of at least two different third party service providers without being distributed in storage resources of a principal service provider, when one service provider is not accessible, the system copies the data to storage resources of a further new third party service provider, or when there isn't a new third party service provider, the system copies the data to storage resources of the principal service provider; or
mode 5, at least one piece of original data and one copy are stored at different physical locations of the principal service provider.

A user may also set by himself/herself strategies to manually back up key data for a disaster recovery purpose, the system can use one of the following methods for manually copying data:
mode 1, when a cloud disk service interface view uses an explicit display of third party service providers, the user can know the third party service providers, then the user copies by himself/herself one or more copies to directories or network HDDs of other third party service providers.
mode 2, when the cloud disk service interface view uses an implicit display of third party service providers and the cloud disk service interface view displays multiple root directories or network HDDs, the system can prompt the user that these root directories or network HDDs are located at different locations, and then the user copies by himself/herself one or more copies to other root directories or network HDDs.

Further, the file service module provides management and/or usage of a directory. Directories or folders support a multi-level mechanism, i.e., subdirectories or sub-folders.

A directory service operation includes at least one of: creating/adding a directory, deleting a directory, reading a directory, modifying a directory, renaming a directory, moving a directory, copying a directory or the like, root directories or network HDDs themselves cann't be deleted, modified or moved. Specific service operations can be implemented through calling resources of a principal service provider by an application interface of a storage layer, or implemented through calling resources or services of a third party service provider by an interface layer.

The file service module manages (reads or writes) metadata or attribution information of a directory or folder, and the metadata or attribution information of the directory includes at least one of: directory name, directory identifier, directory permission, directory space, parent/child directory list, file list or the like.

When the cloud disk service interface view uses an implicit display of third party service providers:
when the cloud disk service interface view displays one root directory or one network HDD, the user doesn't know that the system is a united cloud disk, duplicated subdirectories or files are not displayed in the directory, a background of the system implements backing-up according to an automatic copying strategy. When one service provider is not accessible, it's transparent and unknown to a user.

When the cloud disk service interface view displays multiple root directories or network HDDs, a user can be prompted that these root directories or network HDDs are located at different physical locations, then the user can set by himself/herself strategies as to whether an inter-physical-location backing up is implemented for a disaster recovery purpose. Different root directories can display duplicated subdirectories or files. When one service provider is not accessible, the system, according to strategies, doesn't display a root directory or network HDD corresponding to the service provider or display the root directory or network HDD corresponding to the service provider but should prompt that services may have problems or not be accessible.

When the cloud disk interface view uses an explicit display of third party service providers, then a user can access multiple root directories or multiple drive letters of network HDDs with each root directory or each network HDD displaying a related service provider identifier, and the user can set by himself/herself strategies as to whether an inter-service-provider backing up is implemented for a disaster recovery purpose. Different root directories can display duplicated subdirectories or files. When one service provider is not accessible, the system displays a root directory or network HDD corresponding to the service provider and prompts that services may have problems or not be accessible.

Further, the file service module is configured to manage files of a user.

The file service operation includes at least one of: creating/adding a file, deleting a file, reading a file, modifying a file, renaming a file, moving a file, copying a file, batch uploading files, batch downloading files, packing and downloading a file, breakpoint resumption (upload/download) of a file, file searching, file sharing, online playing, offline download or the like. Specific service operations can be implemented through calling resources of a principal service provider by an application interface of a storage layer, or implemented through calling resources or services of a third party service provider by an interface layer.

The file service module manages (reads or writes) metadata or attribution information of a file, and the metadata or attribution information of the file include at least one of: file name, file identifier, file type, file display mode, file playing mode, file description, file permission, file size, check code, file creation date, file modification date, file last read date, file icon, file resource links of a principal service provider, file resource links of a third party service provider, or file owner.

When a third party engine is called through a third party engine-server interface or the third party engine calls a united cloud disk server, further services of a file are supported, which include at least one of: address book, virus searching and killing, online editing, mail transmission, message notification (through e.g., SMS. MMS, IM, WeChat or the like), social networking file subscription (e.g., blog, microblog and the like), social networking file issuing (e.g., blog, microblog and the like), enterprise application integration or the like.

Particularly, through a Content Delivery Network/Content Distribution Network (CDN) the united cloud disk system can deliver files to a physical location as desired by a user or a location nearest the user. The CDN can be implemented based on distributed file techniques.

Further, the file service module is further configured to manage large files of a user. For large files, a large file fragmentation method is mainly used, each large file is divided into multiple large file fragments, and each large file fragment is also a file of a specific type but must be indexed through metadata of the large file.

A large file service operation includes at least one of: creating/adding a large file (simultaneously creating/adding all large file fragments), deleting a large file (simultaneously deleting all large file fragments), reading a large file (reading all large file fragments), modifying a large file (modifying corresponding large file fragments), renaming a large file (not affecting large file fragmentation and indexing), packing and downloading a large file, breakpoint resumption (upload/download) of a large file, large file searching, large file sharing, online playing, offline download or the like. Specific service operations can be implemented through calling resources of a principal service provider by an application interface of a storage layer, or implemented through calling resources or services of a third party service provider by an interface layer.

The file service module manages (reads or writes) metadata or attribution information of a large file, and the metadata or attribution information of the large file include at least one of: file name, file identifier, file type, file display/playing mode, file description, file permission, file size, check code, file creation date, file modification date, file last read date, file icon, file owner, indexes of large file fragments (including large file fragment name, large file fragment identifier or the like) or the like.

The file service module manages (reads or writes) metadata or attribution information of a large file fragment, the metadata or attribution information of the large file fragment includes at least one of: large file fragment name, large file fragment identifier, large file fragment size, check code, large file fragment creation date, large file fragment modification date, large file fragment last read date, large file fragment resource links of a principal service provider, large file fragment resource links of a third party service provider or the like.

When a third party engine is called through a third party engine-server interface or the third party engine calls a united cloud disk server, further services of a large file are supported, which include at least one of: address book, virus searching and killing, online editing, mail transmission, message notification (through e.g., SMS. MMS, IM, WeChat or the like), social networking file subscription (e.g., blog, microblog and the like), social networking file issuing (e.g., blog, microblog and the like), enterprise application integration or the like.

Particularly, through an CDN the united cloud disk system can deliver files to a physical location as desired by a user or a location nearest the user. The CDN can be implemented based on distributed file techniques.

Further, the object service module provides management and/or usage of a container.

A container service operation includes at least one of: creating/adding a container, deleting a container, reading a container, modifying a container, renaming a container, moving a container, copying a container or the like, a root container itself can't be deleted, modified or moved. Specific service operations can be implemented through calling resources of a principal service provider by an application interface of a storage layer, or implemented through calling resources or services of a third party service provider by an interface layer.

The object service module manages (reads or writes) metadata or attribution information of a container, the metadata or attribution information of the container includes at least one of: container name, container identifier, container permission, container space, parent container list, child container list, object list or the like.

When the cloud disk service interface view uses an implicit display of third party service providers:
when the cloud disk service interface view displays one root container, the user doesn't know that the system is a united cloud disk, duplicated child containers or objects are not displayed in the root container, a background of the system implements backing-up according to an automatic copying strategy. When one service provider is not accessible, it's transparent and unknown to a user.

When the cloud disk service interface view displays multiple root containers, a user can be prompted that these root containers are located at different physical locations, then the user can set by himself/herself strategies as to whether an inter-physical-location backing up is implemented for a disaster recovery purpose. Different root containers can display duplicated child containers or objects. When one service provider is not accessible, the system, according to strategies, doesn't display a root container corresponding to the service provider or display the root container corresponding to the service provider but should prompt that services may have problems or not be accessible.

When the cloud disk interface view uses an explicit display of third party service providers, then a user can access multiple root containers with each root container displaying a related service provider identifier, and the user can set by himself/herself strategies as to whether an inter-service-provider backing up is implemented for a disaster recovery purpose. Different root containers can display duplicated child containers or objects. When one service provider is not accessible, the system displays a root directory or network HDD corresponding to the service provider and prompts that services may have problems or not be accessible.

Further, the object service module is configured to manage objects of a user.

An object service operation includes at least one of: creating an object, adding an object, deleting an object, reading an object, modifying an object, renaming an object, moving an object, copying an object, serializing an object, de-serializing an object, batch uploading objects, batch downloading objects, packing and downloading an objects, breakpoint resumption (upload and/or download) of an object, object searching, object sharing, offline download or the like. Specific service operations can be implemented through calling resources of a principal service provider by an application interface of a storage layer, or implemented through calling resources or services of a third party service provider by an interface layer.

The object service module manages (reads or writes) metadata or attribution information of an object, and the metadata or attribution information of the object includes at least one of: object name, object identifier, object type, object description, object permission, object size, check code, object interface mode, object value, object creation date, object modification date, object last read date, object resource links of a principal service provider, object resource links of a third party service provider, object owner or the like.

When a third party engine is called through a third party engine-server interface or the third party engine calls a united cloud disk server, further services of an object are supported, which include at least one of: address book, virus searching and killing, mail transmission, message notification (through e.g., SMS. MMS, IM, WeChat or the like), social networking subscription (e.g., blog, microblog and the like), social networking issuing (e.g., blog, microblog and the like), enterprise application integration or the like.

Particularly, through an CDN the united cloud disk system can deliver objects to a physical location as desired by a user or a location nearest the user. The CDN can be implemented based on distributed file techniques.

Further, the block service module provides management and/or usage of a data block.

A block service operation includes at least one of: creating a block, adding a block, deleting a block, reading a block, modifying a block, moving a block, copying a block, releasing a block, batch uploading blocks, batch downloading blocks, packing and downloading a block, breakpoint resumption of a block (upload and/or download), offline download or the like. Specific service operations can be implemented through calling resources of a principal service provider by an application interface of a storage layer, or implemented through calling resources or services of a third party service provider by an interface layer.

The block service module manages (reads or writes) metadata or attribution information of a block, and the metadata or attribution information of the block includes at least one of: block identifier, block description, block permission, block size, check code, block interface mode, block creation date, block modification date, block last read date, block resource links of a principal service provider, block resource links of a third party service provider, block owner or the like.

When a third party engine or other systems are called through a third party engine-server interface or the third party engine or other systems call a united cloud disk server, further services of an block are supported, which include at least one of: address book, virus searching and killing, mail transmission, message notification (through e.g., SMS. MMS, IM, WeChat or the like), social networking subscription (e.g., blog, microblog and the like), social networking issuing (e.g., blog, microblog and the like), enterprise application integration or the like.

Particularly, through an CDN the united cloud disk system can deliver blocks to a physical location as desired by a user or a location nearest the user. The CDN can be implemented based on distributed file techniques.

The storage resources include at least one of: a cloud storage resource pool or other storage devices.

Further, the cloud storage resource pool includes at least one of: a distributed storage node, an FC Storage Attached Network (SAN) virtualized device, an IP SAN virtualized device or a Network Attached Storage (NAS) virtualized device; other storage devices include at least one of: a local HDD, an FC storage device, an NAS device, an SAN device, an IP storage device e.g., iSCSI, or an Direct Attached Storage (DAS) device e.g., Small Computer System Interface (SCSI) or Serial Attached SCSI (SAS).

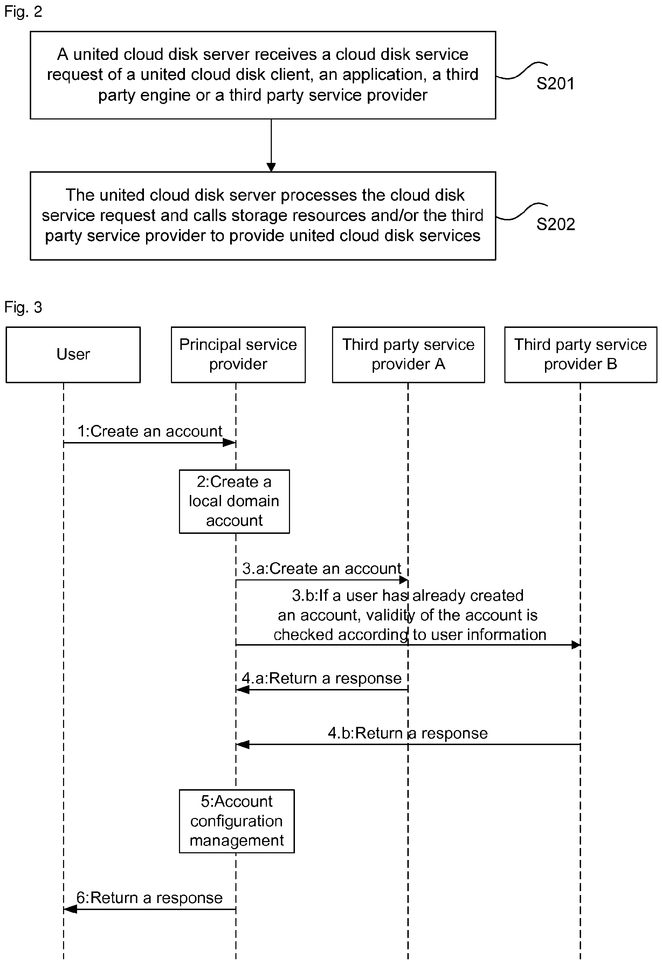

Referring to Fig. 2, it is a schematic flow chart for implementing united cloud disk services according to an embodiment of the present disclosure, which includes the following steps:
step S201, a united cloud disk server receives a cloud disk service request of a united cloud disk client, an application, a third party engine or a third party service provider; and
step s202, the united cloud disk server processes the cloud disk service request and calls storage resources and/or the third party service provider to provide united cloud disk services.

Referring to Fig. 3, it is a schematic diagram showing creation of an account (local domain account) by a user according to an embodiment of the present disclosure. Specifically, the creation includes:
step 1, a cloud disk system supports creation of at least one of a local domain account, a coalition account or a third party service provider account;
   A user may be a tenant or a consumer, a tenant administrator creates a tenant account and a tenant sub-user account, and the consumer creates an individual account. A principal service provider can firstly prompt a user with a type of account to be created, then the user transmits to the principal service providers a local domain account creation request.
Step 2, the principal service provider creates an account of a user through an account management module; depending on objects, it creates respectively a tenant account, a tenant sub-user account and a consumer user account, and configures metadata or attribution information of accounts; then the local domain account is a primary account.
Step 3.a, when a cloud disk service interface view uses an implicit display of third party service providers, without leaking user's private information, it is determined whether an account of another third party service provider is created automatically for a user according to factors such as strategies, user preferences, SLA, QoS requirements and the like, and when the account of another third party service provider is desired to be created, the principal service provider transmits account creation requests to the third party service provider;
   when the cloud disk service interface view uses an explicit display of third party service providers, the principal service provider can prompt that the cloud disk system supports cloud disk services of another third party service provider, and indicate specific information based on which a user determines whether an account of another third party service provider is desired to be created. Herein in Fig. 3, the account of another third party service provider desired to be created refers to an account of a third party service provider A.
Step 3.b, when the cloud disk service interface view uses an explicit display of third party service providers, the principal service provider can prompt that the cloud disk system supports cloud disk services of another third party service provider and indicate specific information, if the user already has an account of a corresponding third party service provider or a coalition account, the user can input information of the account, and the principal service provider transmits to the third party service provider a request for verifying validity of the account; herein in Fig. 3, an account of an existing third party service provider refers to an account of an existing third party service provider B.
   Only one of above steps 3.a or 3.b is implemented.
Step 4.a, the third party service provider returns to the principle service provider a response to indicate whether the account of the third party service provider is successfully created;
Step 4.b, the third party service provider returns to the principal service provider a response to indicate whether the account of the third party service provider or the coalition account requested to be verified is valid or effect;
   Above step 4.a corresponds to step 3.a and step 4.b corresponds to step 3.b.
Step 5, if the account of the third party service provider or the coalition account is successfully created or verified, the principal service provider configures metadata or attribution information of accounts that includes account information of the third party service provider or coalition account information (including at least one of: a secondary account identifier, a secondary account password, a secondary account token, a cloud disk free allowance of a third party service provider, a charging allowance of the principal service provider, third party service provider strategies or the like); and
step 6, the principal service provider returns a response which indicates whether the local domain account is successfully created and whether the account of the third party service provider or the coalition account is successfully created or verified. After successfully creating the local domain account, a user can subsequently modify information of the primary account (local domain account); further the user can subsequently add, modify, delete information of the secondary account (the account of the third party service provider or the coalition account). NOTE: the returning by the user a response which indicates whether the local domain account is successfully created may also be implemented before step 3.

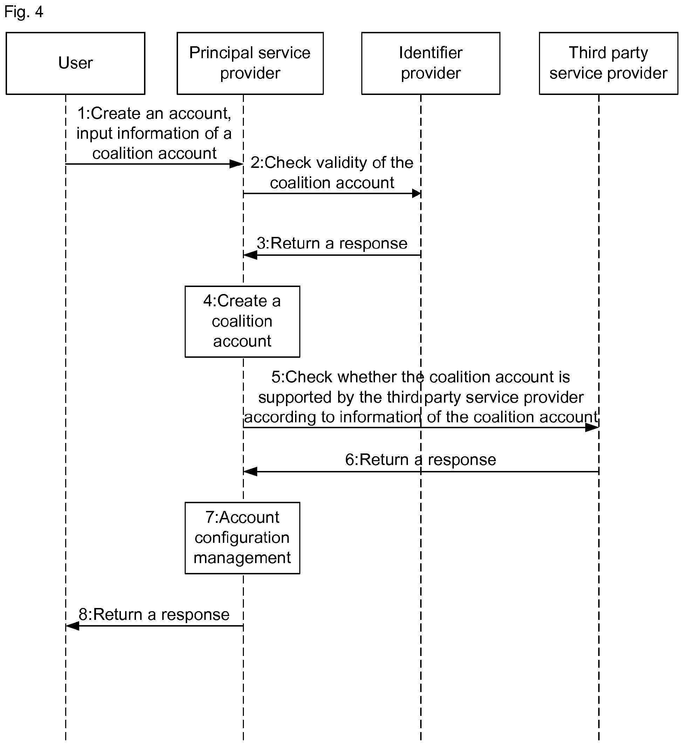

Referring to Fig. 4, it is a schematic diagram showing creation of an account (coalition domain account) by a user according to an embodiment of the present disclosure. Specifically, the creation includes:
step 1, a user transmits to a principal service provider an account creation request and inputs information of an coalition account;
step 2, the principal service provider transmits to an identifier provider a request for verifying validity of the coalition account;
Step 3, the identifier provider returns to the principal service provider a response to indicate whether the account of the third party service provider or the coalition account requested to be verified is valid or effect;
Step 4, the principal service provider creates an account of a user through an account management modue, and configures metadata or attribution information of accounts; then the coalition account is a primary account;
step 5, according to the information of the coalition account, the principal service provider transmits to the third party service provider a request for verifying whether the third party service provider supports the coalition account;
Step 6, the third party service provider returns to the principal service provider a response to indicate whether the coalition account requested to be verified is supported;
Step 7, if it is successfully verified that the third party service provider supports the coalition account, the principal service provider configures metadata or attribution information of the account, which includes at least one of: a third party service provider list, a cloud disk free allowance of a third party service provider, a charging allowance of the principal service provider, third party service provider strategies or the like;
step 8, the principal service provider returns to the user a response to indicate whether the coalition account is successfully created. After successfully creating the local domain account, a user can subsequently add, modify or delete information of the secondary account; further the user can subsequently modify the primary account to a local domain account.

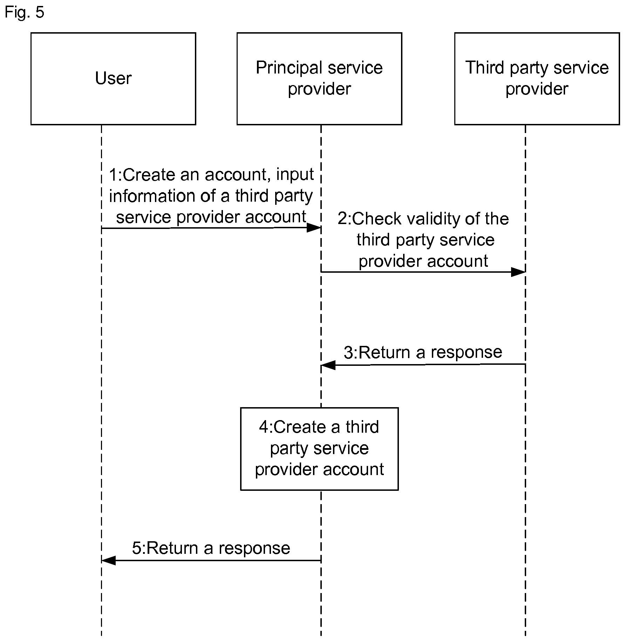

Referring to Fig. 5, it is a schematic diagram showing creation of an account (third party service provider account) by a user according to an embodiment of the present disclosure. Specifically, the creation includes:
step 1, a user transmits to a principal service provider an account creation request and inputs information of a third party service provider account;
step 2, the principal service provider transmits to an third party service provider a request for verifying validity of the account;
step 3.b, the third party service provider returns to the principal service provider a response to indicate whether the account requested to be verified is valid and effect;
step 4, if the verification is successful, the principal service provider creates an account of a user through an account management module, and configures metadata or attribution information of accounts; then the third party service provider account is a primary account; the principal service provider configures metadata or attribution information of the account, which includes at least one of: a third party service provider list, a cloud disk free allowance of a third party service provider, a charging allowance of the principal service provider, third party service provider strategies or the like;
Step 5, the principal service provider returns to the user a response to indicate whether the account of the third party service provider is successfully created; After successfully creating the third party service provider account, the user can subsequently add, modify or delete information of the secondary account; further the user can subsequently modify the primary account to a local domain account.

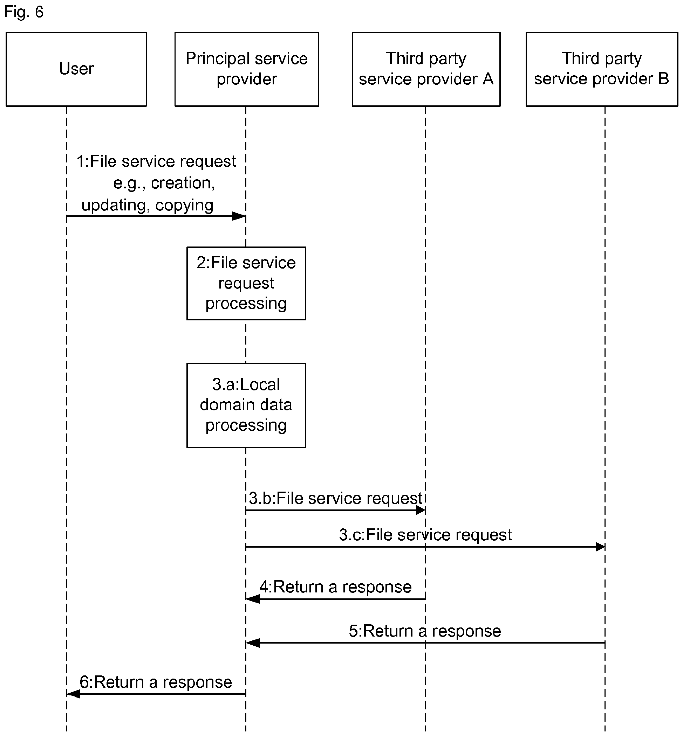

Referring to Fig. 6, it is a schematic diagram showing file services according to an embodiment of the present disclosure. Specifically, it includes:
step 1, a user transmits to a principal service provider a file service request that may be one of the following operations: creating/adding a file, deleting a file, reading a file, modifying a file, renaming a file, moving a file, copying a file, batch uploading files, batch downloading files, packing and downloading a file, breakpoint resumption of a file, file searching, file sharing, online playing, offline download or the like;
step 2, the principal service provider calls a file service module to process the file service request of the user;
step 3.a, storage resources of the principal service provider are called;
step 3.b, the principal service provider transmits a file/data block service request to a third party service provider A through an interface and calls cloud storage resources, traditional storage resources or storage services of the third service provider A;
step 3.c, the principal service provider transmits a file/data block service request to a third party service provider B through an interface and calls cloud disk resources, network HDD resources or services of the third service provider B.
   One or a combination of above steps 3.a, 3.b and 3.c is implemented.
Step 4, the third party service provider A returns a response;
   herein step 4 corresponds to step 3.b;
step 5, the third party service provider B returns a response;
   herein step 5 corresponds to step 3.c;
step 6, the principal service provider returns to the user a response.
Step 6 is directly implemented after step 3.a, or step 6 is implemented after step 4 or step 5 is implemented. Likewise, service operations on data blocks and objects are similar.

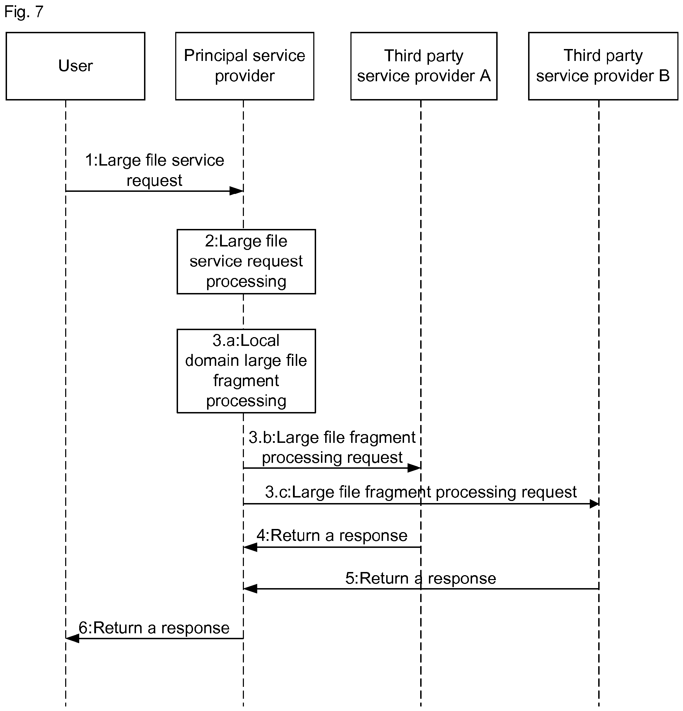

Referring to Fig. 7, it is a schematic diagram showing large file services according to an embodiment of the present disclosure. Specifically, it includes:
step 1, a user transmits to a principal service provider a large file service request that may be one of the following operations: creating/adding a large file, deleting a large file, reading a large file, modifying a large file, renaming a large file, packing and downloading a large file, breakpoint resumption of a large file, large file searching, large file sharing, online playing, offline download or the like;
step 2, the principal service provider calls a file service module to process the large file service request of the user, the file service module specifically performs corresponding processing on respective large file fragments;
step 3.a, resources of the principal service provider namely resources of a storage layer are called;
step 3.b, the principal service provider transmits a large file fragment processing request to a third party service provider A through an interface and calls cloud storage resources, traditional storage resources or storage services of the third service provider A;
step 3.c, the principal service provider transmits a large file fragment request to a third party service provider B through an interface and calls cloud disk resources, network HDD resources or services of the third service provider B;
   one or a combination of above steps 3.a, 3.b and 3.c is implemented.
Step 4, the third party service provider A returns a response;
   herein step 4 corresponds to step 3.b;
step 5, the third party service provider B returns a response;
   herein step 5 corresponds to step 3.c;
step 6, the principal service provider returns to the user a response.
Step 6 is directly implemented after step 3.a, or step 6 is implemented after step 4 or step 5 is implemented.

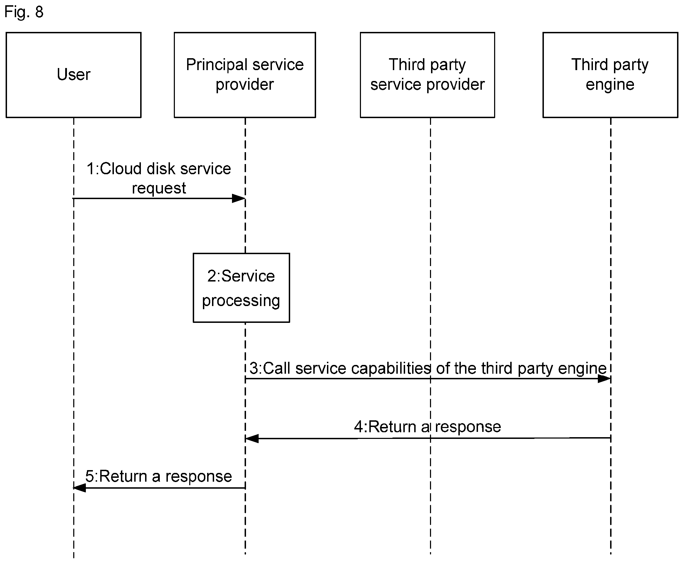

Referring to Fig. 8, it is a schematic diagram showing calling service capabilities of a third party engine according to an embodiment of the present disclosure. Specifically, it includes:
step 1, a user transmits to a principal service provider a cloud disk service request;
step 2, according to an arranged service process, the principal service provider needs to call services or network resources, services or capabilities of a third party engine or other systems, such as one of following operations: calling address book to acquire address information, calling a network anti-virus system to search and kill viruses, calling a network file editing system to edit files on line, calling a network mail system to send mails, calling an SMS system to send short messages, calling an MMS system to send multimedia messages, calling an IM system to send instant messages, calling a WeChat system to send messages, calling a blog system to subscribe social networking files or issue social networking files, calling a microblog system to subscribe social networking files or issue social networking files, enterprise application integration or the like, and the united cloud disk server selects a corresponding third party interface or API to implement service processes;
step 3, services or network resources, services or capabilities of the third party engine or other systems are called;
step 4, the third party engine or other systems return a response;
step 5, the principal service provider returns to the user a response.

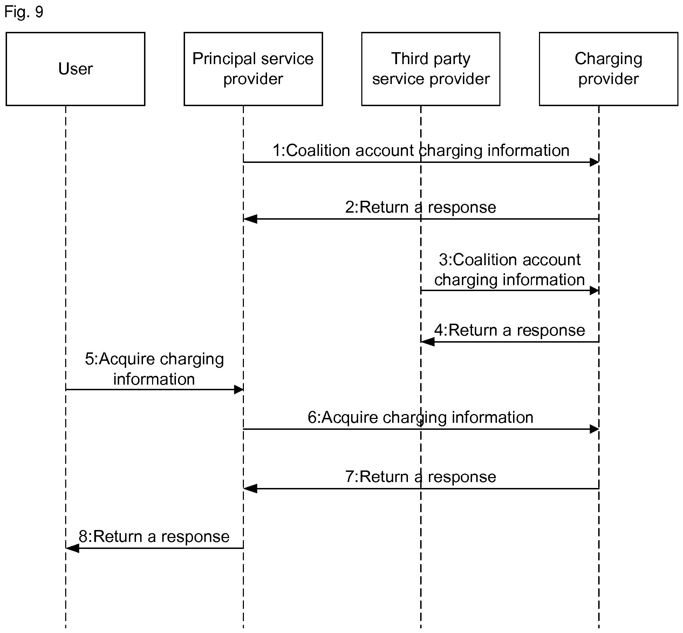

Referring to Fig. 9, it is a schematic diagram showing united charging of a coalition account according to an embodiment of the present disclosure. Specifically, it includes:
step 1, a principal service provider transmits coalition account charging information of the principal service provider to a charging provider;
step 2, the charging provider returns a response to the principal service provider;
step 3, a third party service provider transmits coalition account charging information of the third party service provider to the charging provider;
step 4, the charging provider returns a response to the third party service provider;
step 5, a user transmits to the principal service provider a coalition account charging information acquisition request;
step 6, the principal service provider transmits to the charging provider a coalition account charging information acquisition request;
step 7, the charging provider returns to the principal service provider a response including coalition account charging information;
step 8, the principal service provider returns to the user a response including the coalition account charging information.

NOTE: the user can transmit the coalition account charging information acquisition request directly to the charging provider, and the charging provider returns the coalition account charging information directly to the user. This case is beyond the scope of the present disclosure.

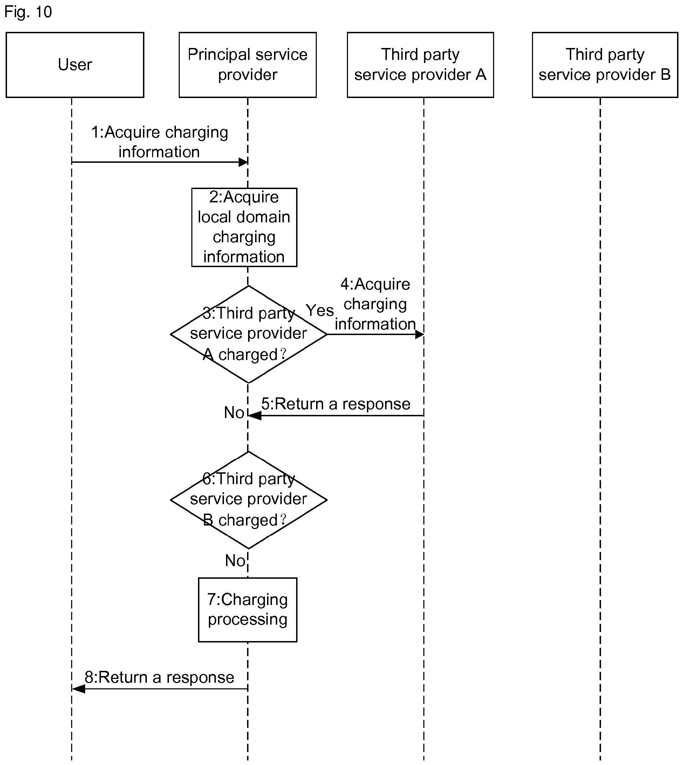

Referring to Fig. 10, it is a schematic diagram showing charging of a local domain account and a third party service provider account according to an embodiment of the present disclosure. Specifically, it includes:
step 1, a user transmits to a principal service provider a charging information acquisition request, a primary account can be a local domain account or a third party service provider account;
step 2, the principal service provider acquires local domain charging information;
step 3, the principal service provider determines whether resources or services of a third party service provider A are to be charged, if Yes, proceed to step 4, otherwise, proceed to step 6;
step 4, the principal service provider transmits to the third party service provider a charging information acquisition request;
step 5, the third party service provider returns to the principal service provider a response including charging information;
step 6, the principal service provider determines whether resources or services of a third party service provider B are to be charged, if Yes, proceed to step 7;
step 7, the principal service provider synthesizes the user account's local domain charging information and charging information of other third party service provider domain;
step 8, the principal service provider returns to the user a response including the account charging information.

Apparently, it should be appreciated by those skilled in the art that various modules and steps of the present disclosure above can be implemented by a general-purposed computing device, and they may be integrated into an individual computing device or distributed on a network consisting of multiple computing devices; optionally, they can be implemented by program codes executable by a computing device so that they can be stored in a storage device so as to be implemented by a computing device, and in some cases, steps shown and described may be implemented in an order different from what described herein, or they can be implemented by being made as respective IC modules or by some modules or steps therein being made as individual IC modules. All or part of steps in the above method can be implemented by related a hardware under instruction from programs which can be stored in a computer-readable storage medium such as an ROM, magnetic disk, optical disk or the like. In this mode, the present disclosure are not limited to any specific combinations of a hardware and a software.

What described are merely preferable embodiments of the present disclosure and are not intended to limit the present disclosure, and numerous modifications and variations will be apparent to those skilled in the art. All modifications, replacements and improvements made within the scope of the claims should be included within the scope of protection of the present disclosure.

## Claims

1. A united cloud disk system, comprising: a principal service provider and a third party service provider, wherein the principal service provider comprises a united cloud disk server and storage resources;
the united cloud disk server is configured to process a cloud disk service request transmitted by a united cloud disk client, an application, a third party engine or the third party service provider, and call the storage resources of the principal service provider and/or the third party service provider to provide united cloud disk services, wherein the united cloud disk services comprise at least one of: account services, directory services, folder services, container services, file services, object services, block services, sharing, online playing, offline download, upload/download by non-cloud disk users or searching;
the storage resources are configured to be called by the united cloud disk server to access data; and
the third party service provider comprises a united cloud disk third party service provider and a non-united cloud disk third party service provider and is configured to be called by the united cloud disk server, wherein the united cloud disk third party service provider refers to another service provider that includes united cloud disk servers and that provides the united cloud disk services, and the non-united cloud disk third party service provider refers to another service provider that doesn't include united cloud disk servers but provide the cloud disk services, cloud storage services or resources;
wherein the united cloud disk server is further configured to back up data stored in a file, object or block by using any one of the following modes:
mode 1, copying data stored by the principal service provider to storage resources provided by at least two other different third party service providers or copying the data to two other different physical locations of the principal service provider when there are no third party service providers so as to retain at least one piece of original data and two copies;
mode 2, copying the data to storage resources provided by at least three different third party service providers or copying the data to the principal service provider when there are no third party service providers so as to retain at least one piece of original data and two copies;
mode 3, copying the data stored by the principal service provider to storage resources provided by at least one other third party service provider or copying the data to another physical location of the principal service provider when there are no third party service providers so as to retain at least one piece of original data and one copy;
mode 4, storing the data to storage resources provided by at least two different third party service providers or copying the data to the principal service provider when there are no third party service providers so as to retain at least one piece of original data and one copy.

2. The united cloud disk system according to claim 1, wherein the united cloud disk system further comprises at least one of: an interface between the storage resources and the united cloud disk server, an interface between the united cloud disk third party service provider and the united cloud disk server or an interface between the non-united cloud disk third party service provider and the united cloud disk server.

3. The united cloud disk system according to claim 1, wherein the united cloud disk system further comprises at least one of: an interface between the untied cloud disk client and the united cloud disk server, an interface between the application and the united cloud disk server, an interface between the third party engine and the united cloud disk server or interfaces between other united cloud disk servers and the united cloud disk server.

4. The united cloud disk system according to claim 2 or 3, wherein each interface provides at least one of the following functions: authentication, authorization, identifier management operation, account management operation, file service operation, object service operation, block service operation, notification, request or response.

5. A united cloud disk server included in a principal service provider, comprising at least one of an identifier management module, an account management module, a file service module, an object service module and a block service module, wherein
the identifier management module is configured to manage user identifiers;
the account management module is configured to manage metadata or attribution information of at least one of the following user accounts: a tenant account, a tenant sub-user account or a consumer user account;
the file service module is configured to provide management and/or usage of a directory or file;
the object service module is configured to provide management and/or usage of a container or object; and
the block service module is configured to provide management and/or usage of a data block;
wherein at least one of the file service module, the object service module or the block service module is further configured to back up data stored in a file, object or block by using any one of the following modes:
mode 1, copying data stored by the principal service provider to storage resources provided by at least two other different third party service providers or copying the data to two other different physical locations of the principal service provider when there are no third party service providers so as to retain at least one piece of original data and two copies;
mode 2, copying the data to storage resources provided by at least three different third party service providers or copying the data to the principal service provider when there are no third party service providers so as to retain at least one piece of original data and two copies;
mode 3, copying the data stored by the principal service provider to storage resources provided by at least one other third party service provider or copying the data to another physical location of the principal service provider when there are no third party service providers so as to retain at least one piece of original data and one copy;
mode 4, storing the data to storage resources provided by at least two different third party service providers or copying the data to the principal service provider when there are no third party service providers so as to retain at least one piece of original data and one copy.

6. The united cloud disk server according to claim 5, wherein
the metadata or attribution information of the tenant account comprises at least one of: a tenant primary account identifier, a tenant primary account password, a tenant primary account token, a tenant secondary account identifier, a tenant secondary account password, a tenant secondary account token, a tenant charging plan, a third party service provider list, a cloud disk free allowance of a principal service provider, a cloud disk free allowance of a third party service provider, a charging allowance of the principal service provider, a charging allowance of the third party service provider, supported service functions, principal service provider strategies, third party service provider strategies, Service Level Agreements (SLAs), Quality of Service (QoS) requirements, a tenant sub-user account list, tenant strategies or tenant administrator interface view configurations;
the metadata or attribution information of the tenant sub-user account comprises at least one of: a tenant sub-user primary account identifier, a tenant sub-user primary account password, a tenant sub-user primary account token, a tenant sub-user secondary account identifier, a tenant sub-user secondary account password, a tenant sub-user secondary account token, tenant sub-user interface view configurations, a third party service provider list, a cloud disk allowance of a principal service provider, a cloud disk allowance of a third party service provider, supported service functions, tenant sub-user preferences, tenant strategies, access modes or supported terminal types; and
metadata or attribution information of the consumer user account comprises at least one of: a consumer user primary account identifier, a consumer user primary account password, a consumer user primary account token, a consumer user secondary account identifier, a consumer user secondary account password, a consumer user secondary account token, consumer user interface view configurations, a consumer user charging plan, a third party service provider list, a cloud disk free allowance of a principal service provider, a cloud disk free allowance of a third party service provider, a charging allowance of the principal service provider, a charging allowance of the third party service provider, supported service functions, user preferences, principal service provider strategies, third party service provider strategies, SLAs, QoS requirements, access modes or supported terminal types.

7. The united cloud disk server according to claim 5, wherein
providing management of the file by the file service module comprises: the file service module manages metadata or attribution information of the file;
the metadata or attribution information of the file comprises at least one of: file name, file identifier, file type, file display mode, file playing mode, file description, file permission, file size, check code, file creation date, file modification date, file last read date, file icon, file resource links of a principal service provider, file resource links of a third party service provider, or file owner.

8. The united cloud disk server according to claim 5, wherein
the file is a large file, providing management of the file by the file service module comprises: the file service module provides management of metadata or attribution information of the large file;
the large file is a file larger than a predetermined size; the metadata or attribution information of the large file comprises at least one of: file name, file identifier, file type, file display/playing mode, file description, file permission, file size, check code, file creation date, file modification date, file last read date, file icon, file owner or large file fragmentation index.

9. The united cloud disk server according to claim 5, wherein
providing management of the object by the object service module comprises: the object service module manages metadata or attribution information of the object;
the metadata or attribution information of the object comprises at least one of: object name, object identifier, object type, object description, object permission, object size, check code, object interface mode, object value, object creation date, object modification date, object last read date, object resource links of a principal service provider, object resource links of a third party service provider, or object owner;
providing management of the container by the object service module comprises: the object service module manages metadata or attribution information of the container;
the metadata or attribution information of the container comprises at least one of: container name, container identifier, container permission, container space, parent container list, child container list or object list.

10. The united cloud disk server according to claim 5, wherein
providing management of the data block by the block service module comprises: the block service module manages metadata or attribution information of the block;
the metadata or attribution information of the block comprises at least one of: block identifier, block description, block permission, block size, check code, block interface mode, block creation date, block modification date, block last read date, block resource links of a principal service provider, block resource links of a third party service provider, or block owner.

11. A united cloud disk serving method, comprising:
receiving, by a united cloud disk server, a cloud disk service request transmitted by a united cloud disk client, an application, a third party engine or a third party service provider; and
processing, by the united cloud disk server, the cloud disk service request and calling storage resources of the principal service provider and/or the third party service provider to provide united cloud disk services;
wherein the united cloud disk services comprise at least one of: account services, directory services, folder services, container services, file services, object services, block services, sharing, online playing, offline download, upload/download by non-cloud disk users or searching;
wherein the method further comprises:
backing up, by the united cloud disk server, data stored in a file, object or block by using any one of the following modes:
mode 1, copying data stored by the principal service provider to storage resources provided by at least two other different third party service providers or copying the data to two other different physical locations of the principal service provider when there are no third party service providers so as to retain at least one piece of original data and two copies;
mode 2, copying the data to storage resources provided by at least three different third party service providers or copying the data to the principal service provider when there are no third party service providers so as to retain at least one piece of original data and two copies;
mode 3, copying the data stored by the principal service provider to storage resources provided by at least one other third party service provider or copying the data to another physical location of the principal service provider when there are no third party service providers so as to retain at least one piece of original data and one copy;
mode 4, storing the data to storage resources provided by at least two different third party service providers or copying the data to the principal service provider when there are no third party service providers so as to retain at least one piece of original data and one copy.

## Patentansprüche

1. Vereinigte-Cloud-Plattensystem, Folgendes umfassend: einen Hauptdienstanbieter und einen externen Dienstanbieter, wobei der Hauptdienstanbieter einen Vereinigte-Cloud-Plattenserver und Speicherressourcen umfasst,
wobei der Vereinigte-Cloud-Plattenserver dafür konfiguriert ist, eine Cloud-Plattendienstanfrage zu verarbeiten, die durch einen Vereinigte-Cloud-Platten-Client, eine Anwendung, eine Maschine eines externen Anbieters oder den externen Dienstanbieter übertragen wird, und die Speicherressourcen des Hauptdienstanbieters und/oder des externen Dienstanbieters aufzurufen, um Vereinigte-Cloud-Plattendienste bereitzustellen, wobei die Vereinigte-Cloud-Plattendienste mindestens eines des Folgenden umfassen: Kontodienste, Verzeichnisdienste, Ordnerdienste, Containerdienste, Dateidienste, Objektdienste, Blockdienste, Sharing, Online-Abspielen, Offline-Download, Upload/Download durch Nicht-Cloud-Plattenbenutzer oder Suche,
wobei die Speicherressourcen dafür konfiguriert sind, durch den Vereinigte-Cloud-Platten-Server aufgerufen zu werden, um auf Daten zuzugreifen, und
wobei der externe Dienstanbieter einen externen Vereinigte-Cloud-Plattendienstanbieter und einen externen Nicht-Vereinigte-Cloud-Plattendienstanbieter umfasst und dafür konfiguriert ist, durch den Vereinigte-Cloud-Platten-Server aufgerufen zu werden, wobei sich der externe Vereinigte-Cloud-Plattendienstanbieter auf einen weiteren Dienstanbieter bezieht, der Vereinigte-Cloud-Platten-Server beinhaltet und der die Vereinigte-Cloud-Plattendienste bereitstellt, und sich der externe Nicht-Vereinigte-Cloud-Plattendienstanbieter auf einen weiteren Dienstanbieter bezieht, der keine Vereinigte-Cloud-Platten-Server beinhaltet, aber die Cloud-Plattendienste, Cloud-Speicherdienste oder -ressourcen bereitstellt,
wobei der Vereinigte-Cloud-Platten-Server ferner dafür konfiguriert ist, Daten, die in einer Datei, einem Objekt oder Block gespeichert sind, mit Hilfe eines der folgenden Modi zu sichern:
Modus 1 - Kopieren von Daten, die durch den Hauptdienstanbieter gespeichert werden, in Speicherressourcen, die durch mindestens zwei weitere verschiedene externe Dienstanbieter bereitgestellt werden, oder Kopieren der Daten an zwei weiteren verschiedenen physischen Orten des Hauptdienstanbieters, wenn keine externen Dienstanbieter vorhanden sind, so dass mindestens einmal die Originaldaten und zwei Kopien bewahrt werden,
Modus 2 - Kopieren der Daten in Speicherressourcen, die durch mindestens drei verschiedene externe Dienstanbieter bereitgestellt werden, oder Kopieren der Daten in den Hauptdienstanbieter, wenn keine externen Dienstanbieter vorhanden sind, so dass mindestens einmal die Originaldaten und zwei Kopien bewahrt werden,
Modus 3 - Kopieren der Daten, die durch den Hauptdienstanbieter gespeichert werden, in Speicherressourcen, die durch mindestens einen weiteren externen Dienstanbieter bereitgestellt werden, oder Kopieren der Daten an einem weiteren physischen Ort des Hauptdienstanbieters, wenn keine externen Dienstanbieter vorhanden sind, so dass mindestens einmal die Originaldaten und eine Kopie bewahrt werden,
Modus 4 - Speichern der Daten in Speicherressourcen, die durch mindestens zwei verschiedene externe Dienstanbieter bereitgestellt werden, oder Kopieren der Daten in den Hauptdienstanbieter, wenn keine externen Dienstanbieter vorhanden sind, so dass mindestens einmal die Originaldaten und eine Kopie bewahrt werden.

2. Vereinigte-Cloud-Plattensystem nach Anspruch 1, wobei das Vereinigte-Cloud-Plattensystem ferner mindestens eines des Folgenden umfasst: eine Schnittstelle zwischen den Speicherressourcen und dem Vereinigte-Cloud-Platten-Server, eine Schnittstelle zwischen dem externen Vereinigte-Cloud-Plattendienstanbieter und dem Vereinigte-Cloud-Platten-Server oder eine Schnittstelle zwischen dem externen Nicht-Vereinigte-Cloud-Plattendienstanbieter und dem Vereinigte-Cloud-Platten-Server.

3. Vereinigte-Cloud-Plattensystem nach Anspruch 1, wobei das Vereinigte-Cloud-Plattensystem ferner mindestens eines des Folgenden umfasst: eine Schnittstelle zwischen dem Vereinigte-Cloud-Platten-Client und dem Vereinigte-Cloud-Platten-Server, eine Schnittstelle zwischen der Anwendung und dem Vereinigte-Cloud-Platten-Server, eine Schnittstelle zwischen der Maschine eines externen Anbieters und dem Vereinigte-Cloud-Platten-Server oder Schnittstellen zwischen weitere Vereinigte-Cloud-Platten-Servern und dem Vereinigte-Cloud-Platten-Server.

4. Vereinigte-Cloud-Plattensystem nach Anspruch 2 oder 3, wobei jede Schnittstelle mindestens eine der folgenden Funktionen bereitstellt: Authentifizierung, Autorisierung, Kennungsverwaltungsoperation, Kontoverwaltungsoperation, Dateidienstoperation, Objektdienstoperation, Blockdienstoperation, Benachrichtigung, Anfrage oder Antwort.

5. Vereinigte-Cloud-Platten-Server, enthalten in einem Hauptdienstanbieter, mindestens eines des Folgenden umfassend: ein Kennungsverwaltungsmodul, ein Kontoverwaltungsmodul, ein Dateidienstmodul, ein Objektdienstmodul und ein Blockdienstmodul, wobei:
das Kennungsverwaltungsmodul dafür konfiguriert ist, Benutzerkennungen zu verwalten,
das Kontoverwaltungsmodul dafür konfiguriert ist, Metadaten oder Zuordnungsinformationen von mindestens einem der folgenden Benutzerkonten zu verwalten: Mieterkonto, Mieter-Teilbenutzerkonto oder ein Verbraucherbenutzerkonto,
das Dateidienstmodul dafür konfiguriert ist, Verwaltung und/oder Nutzung eines Verzeichnisses oder einer Datei bereitzustellen,
das Objektdienstmodul dafür konfiguriert ist, Verwaltung und/oder Nutzung eines Containers oder Objekts bereitzustellen,
das Blockdienstmodul dafür konfiguriert ist, Verwaltung und/oder Nutzung eines Datenblocks bereitzustellen,
wobei das Dateidienstmodul und/oder das Objektdienstmodul und/oder das Blockdienstmodul ferner dafür konfiguriert ist/sind, Daten, die in einer Datei, einem Objekt oder einem Block gespeichert sind, mit Hilfe eines der folgenden Modi zu sichern:
Modus 1 - Kopieren von Daten, die durch den Hauptdienstanbieter gespeichert werden, in Speicherressourcen, die durch mindestens zwei weitere verschiedene externe Dienstanbieter bereitgestellt werden, oder Kopieren der Daten an zwei weiteren verschiedenen physischen Orten des Hauptdienstanbieters, wenn keine externen Dienstanbieter vorhanden sind, so dass mindestens einmal die Originaldaten und zwei Kopien bewahrt werden,
Modus 2 - Kopieren der Daten in Speicherressourcen, die durch mindestens drei verschiedene externe Dienstanbieter bereitgestellt werden, oder Kopieren der Daten in den Hauptdienstanbieter, wenn keine externen Dienstanbieter vorhanden sind, so dass mindestens einmal die Originaldaten und zwei Kopien bewahrt werden,
Modus 3 - Kopieren der Daten, die durch den Hauptdienstanbieter gespeichert werden, in Speicherressourcen, die durch mindestens einen weiteren externen Dienstanbieter bereitgestellt werden, oder Kopieren der Daten an einem weiteren physischen Ort des Hauptdienstanbieters, wenn keine externen Dienstanbieter vorhanden sind, so dass mindestens einmal die Originaldaten und eine Kopie bewahrt werden,
Modus 4 - Speichern der Daten in Speicherressourcen, die durch mindestens zwei verschiedene externe Dienstanbieter bereitgestellt werden, oder Kopieren der Daten in den Hauptdienstanbieter, wenn keine externen Dienstanbieter vorhanden sind, so dass mindestens einmal die Originaldaten und eine Kopie bewahrt werden.

6. Vereinigte-Cloud-Platten-Server nach Anspruch 5, wobei:
die Metadaten oder Zuordnungsinformationen des Mieterkontos mindestens eines des Folgenden umfassen: eine primäre Mieterkontokennung, ein primäres Mieterkontopasswort, ein primäres Mieterkonto-Token, eine sekundäre Mieterkontokennung, ein sekundäres Mieterkontopasswort, ein sekundäres Mieterkonto-Token, einen Mieterverrechnungsplan, eine Liste externer Dienstanbieter, ein zugestandener kostenfreier Cloud-Platten-Anteil eines Hauptdienstanbieters, ein zugestandener kostenfreier Cloud-Platten-Anteil eines externen Dienstanbieters, ein zugestandener kostenpflichtiger Anteil des Hauptdienstanbieters, ein zugestandener kostenpflichtiger Anteil des externen Dienstanbieters, unterstützte Dienstfunktionen, Hauptdienstanbieterstrategien, Strategien des externen Dienstanbieters, SLA (Service-Level-Agreement), Dienstgüteerfordernisse (QoS), eine Mieter-Teilbenutzerkontoliste, Mieterstrategien oder Mieteradministrator-Schnittstellenansichtkonfigurationen,
die Metadaten oder Zuordnungsinformationen des Mieter-Teilbenutzerkontos mindestens eines des Folgenden umfassen: eine primäre Mieter-Teilbenutzerkontokennung, ein primäres Mieter-Teilbenutzerkontopasswort, ein primäres Mieter-Teilbenutzerkonto-Token, eine sekundäre Mieter-Teilbenutzerkontokennung, ein sekundäres Mieter-Teilbenutzerkontopasswort, ein sekundäres Mieter-Teilbenutzerkonto-Token, Mieter-Teilbenutzer-Schnittstellenansichtkonfigurationen, eine Liste externer Dienstanbieter, einen zugestandenen Cloud-Plattenanteil eines Hauptdienstanbieters, einen zugestandenen Cloud-Plattenanteil eines externen Dienstanbieters, unterstützte Dienstfunktionen, Mieter-Teilbenutzerpräferenzen, Mieterstrategien, Zugriffsmodi oder unterstützte Arten von Endgeräten,
die Metadaten oder Zuordnungsinformationen des Verbraucherbenutzerkontos mindestens eines des Folgenden umfassen: eine primäre Verbraucherbenutzerkontokennung, ein primäres Verbraucherbenutzerkontopasswort, ein primäres Verbraucherbenutzerkonto-Token, eine sekundäre Verbraucherbenutzerkontokennung, ein sekundäres Verbraucherbenutzerkontopasswort, ein sekundäres Verbraucherbenutzerkonto-Token, Verbraucherbenutzer-Schnittstellenansichtkonfigurationen, einen Verbraucherbenutzerverrechnungsplan, eine Liste externer Dienstanbieter, einen zugestandenen kostenfreien Cloud-Platten-Anteil eines Hauptdienstanbieters, einen zugestandenen kostenfreien Cloud-Platten-Anteil eines externen Dienstanbieters, einen kostenpflichtigen Anteil des Hauptdienstanbieters, einen kostenpflichtigen Anteil des externen Dienstanbieters, unterstützte Dienstfunktionen, Benutzerpräferenzen, Hauptdienstanbieterstrategien, Strategien des externen Dienstanbieters, SLA (Service-Level-Agreement), Dienstgüteerfordernisse (QoS), Zugriffsmodi oder unterstützte Arten von Endgeräten.

7. Vereinigte-Cloud-Platten-Server nach Anspruch 5, wobei
das Bereitstellen von Verwaltung der Datei durch das Dateidienstmodul Folgendes umfasst: das Dateidienstmodul verwaltet Metadaten oder Zuordnungsinformationen der Datei,
wobei die Metadaten oder Zuordnungsinformationen der Datei mindestens eines des Folgenden umfassen: Dateiname, Dateikennung, Dateiart, Dateianzeigemodus, Dateiabspielmodus, Dateibeschreibung, Dateizulassung, Dateigröße, Prüfungscode, Dateierstellungsdatum, Dateiveränderungsdatum, Datum des letzten Lesens der Datei, Dateisymbol, Dateiressourcenverbindungen eines Hauptdienstanbieters, Dateiressourcenverbindungen eines externen Dienstanbieters oder Dateieigentümer.

8. Vereinigte-Cloud-Platten-Server nach Anspruch 5, wobei
die Datei eine große Datei ist und das Bereitstellen von Verwaltung der Datei durch das Dateidienstmodul Folgendes umfasst: das Dateidienstmodul stellt Verwaltung von Metadaten oder Zuordnungsinformationen der großen Datei bereit,
die große Datei eine Datei ist, die größer als eine festgelegte Größe ist, wobei die Metadaten oder Zuordnungsinformationen der großen Datei mindestens eines des Folgenden umfassen: Dateiname, Dateikennung, Dateiart, Dateianzeige-/- abspielmodus, Dateibeschreibung, Dateizulassung, Dateigröße, Prüfungscode, Dateierstellungsdatum, Dateiveränderungsdatum, Datum des letzten Lesens der Datei, Dateisymbol, Dateieigentümer oder Fragmentierungsindex der großen Datei.

9. Vereinigte-Cloud-Platten-Server nach Anspruch 5, wobei
das Bereitstellen von Verwaltung des Objekts durch das Objektdienstmodul Folgendes umfasst: das Objektdienstmodul verwaltet Metadaten oder Zuordnungsinformationen des Objekts,
wobei die Metadaten oder Zuordnungsinformationen des Objekts mindestens eines des Folgenden umfassen: Objektname, Objektkennung, Objektart, Objektbeschreibung, Objektzulassung, Objektgröße, Prüfungscode, Objektschnittstellenmodus, Objektwert, Objekterstellungsdatum, Objektveränderungsdatum, Datum des letzten Lesens des Objekts, Objektressourcenverbindungen eines Hauptdienstanbieters, Objektressourcenverbindungen eines externen Dienstanbieters oder Objekteigentümer,
das Bereitstellen von Verwaltung des Containers durch das Objektdienstmodul Folgendes umfasst:
das Objektdienstmodul verwaltet Metadaten oder Zuordnungsinformationen des Containers,
wobei die Metadaten oder Zuordnungsinformationen des Containers mindestens eines des Folgenden umfassen: Containername, Containerkennung, Containerzulassung, Containerraum, Elterncontainerliste, Kindercontainerliste oder Objektliste.

10. Vereinigte-Cloud-Platten-Server nach Anspruch 5, wobei
das Bereitstellen von Verwaltung des Datenblocks durch das Blockdienstmodul Folgendes umfasst: das Blockdienstmodul verwaltet Metadaten oder Zuordnungsinformationen des Blocks,
wobei die Metadaten oder Zuordnungsinformationen des Blocks mindestens eines des Folgenden umfassen: Blockkennung, Blockbeschreibung, Blockzulassung, Blockgröße, Prüfungscode, Blockschnittstellenmodus, Blockerstellungsdatum, Blockveränderungsdatum, Datum des letzten Lesens des Blocks, Blockressourcenverbindungen eines Hauptdienstanbieters, Blockressourcenverbindungen eines externen Dienstanbieters oder Blockeigentümer.

11. Vereinigte-Cloud-Plattenverfahren, Folgendes umfassend:
Empfangen einer Cloud-Plattendienstanfrage durch einen Vereinigte-Cloud-Platten-Server, die durch einen Vereinigte-Cloud-Platten-Client, eine Anwendung, eine Maschine eines externen Anbieters oder einen externen Dienstanbieter übertragen wird, und
Verarbeiten der Cloud-Plattendienstanfrage und Aufrufen von Speicherressourcen des Hauptdienstanbieters und/oder des externen Dienstanbieters durch den Vereinigte-Cloud-Platten-Server, um Vereinigte-Cloud-Plattendienste bereitzustellen,
wobei die Vereinigte-Cloud-Plattendienste mindestens eines des Folgenden umfassen: Kontodienste, Verzeichnisdienste, Ordnerdienste, Containerdienste, Dateidienste, Objektdienste, Blockdienste, Sharing, Online-Abpielen, Offline-Download, Herauf- oder Herunterladen durch Nicht-Cloud-Plattenbenutzer oder Suche,
wobei das Verfahren ferner Folgendes umfasst:
Sichern von Daten, die in einer Datei, einem Objekt oder einem Block gespeichert sind, durch den Vereinigte-Cloud-Platten-Server mit Hilfe eines der folgenden Modi:
Modus 1 - Kopieren von Daten, die durch den Hauptdienstanbieter gespeichert werden, in Speicherressourcen, die durch mindestens zwei weitere verschiedene externe Dienstanbieter bereitgestellt werden, oder Kopieren der Daten an zwei weitere verschiedene physische Orte des Hauptdienstanbieters, wenn keine externen Dienstanbieter vorhanden sind, so dass mindestens einmal die Originaldaten und zwei Kopien bewahrt werden,
Modus 2 - Kopieren der Daten in Speicherressourcen, die durch mindestens drei verschiedene externe Dienstanbieter bereitgestellt werden, oder Kopieren der Daten in den Hauptdienstanbieter, wenn keine externen Dienstanbieter vorhanden sind, so dass mindestens einmal die Originaldaten und zwei Kopien bewahrt werden,
Modus 3 - Kopieren von Daten, die durch den Hauptdienstanbieter gespeichert sind, in Speicherressourcen, die durch mindestens einen weiteren externen Dienstanbieter bereitgestellt sind, oder Kopieren der Daten an einen weiteren physischen Ort des Hauptdienstanbieters, wenn keine externen Dienstanbieter vorhanden sind, so dass mindestens einmal die Originaldaten und eine Kopie bewahrt werden,
Modus 4 - Speichern der Daten in Speicherressourcen, die durch mindestens zwei verschiedene externe Dienstanbieter bereitgestellt werden, oder Kopieren der Daten in den Hauptdienstanbieter, wenn keine externen Dienstanbieter vorhanden sind, so dass mindestens einmal die Originaldaten und eine Kopie bewahrt werden.

## Revendications

1. Système de disque infonuagique uni, comprenant : un fournisseur de services principal et un fournisseur de services tiers, dans lequel le fournisseur de services principal comprend un serveur de disque infonuagique uni et des ressources de stockage ;
dans lequel le serveur de disque infonuagique uni est configuré de manière à traiter une demande de services de disque infonuagique transmise par un dispositif client de disque infonuagique uni, une application, un moteur tiers ou le fournisseur de services tiers, et à appeler les ressources de stockage du fournisseur de services principal et/ou du fournisseur de services tiers pour fournir des services de disque infonuagique uni, dans lequel les services de disque infonuagique uni comprennent au moins l'un parmi : des services de compte, des services de répertoire, des services de dossier, des services de conteneur, des services de fichier, des services d'objet, des services de bloc, le partage, la lecture en ligne, le téléchargement hors ligne, le chargement/téléchargement par des utilisateurs de disques non infonuagiques, ou la recherche ;
dans lequel les ressources de stockage sont configurées de manière à être appelées par le serveur de disque infonuagique uni pour accéder à des données ; et
dans lequel le fournisseur de services tiers comprend un fournisseur de services tiers de disque infonuagique uni et un fournisseur de services tiers de disque infonuagique non uni, et est configuré de manière à être appelé par le serveur de disque infonuagique uni, dans lequel le fournisseur de services tiers de disque infonuagique uni fait référence à un autre fournisseur de services qui inclut des serveurs de disque infonuagique uni et qui fournit les services de disque infonuagique uni, et le fournisseur de services tiers de disque infonuagique non uni fait référence à un autre fournisseur de services qui n'inclut pas de serveurs de disque infonuagique uni, mais qui fournit les services de disque infonuagique, des ressources ou des services de stockage infonuagique ;
dans lequel le serveur de disque infonuagique uni est en outre configuré de manière à sauvegarder des données stockées dans un fichier, dans un objet ou dans un bloc, en faisant appel à l'un quelconque des modes suivants consistant à :
mode 1 : copier des données stockées par le fournisseur de services principal sur des ressources de stockage fournies par au moins deux autres fournisseurs de services tiers différents, ou copier les données dans deux autres emplacements physiques différents du fournisseur de services principal lorsqu'il n'y a pas de fournisseurs de services tiers, de manière à conserver au moins un élément de données d'origine et deux copies ;
mode 2 : copier les données sur des ressources de stockage fournies par au moins trois fournisseurs de services tiers différents, ou copier les données au niveau du fournisseur de services principal lorsqu'il n'y a pas de fournisseurs de services tiers, de manière à conserver au moins un élément de données d'origine et deux copies ;
mode 3 : copier les données stockées par le fournisseur de services principal sur des ressources de stockage fournies par au moins un autre fournisseur de services tiers, ou copier les données dans un autre emplacement physique du fournisseur de services principal lorsqu'il n'y a pas de fournisseurs de services tiers, de manière à conserver au moins un élément de données d'origine et une copie ;
mode 4 : stocker les données sur des ressources de stockage fournies par au moins deux fournisseurs de services tiers différents, ou copier les données au niveau du fournisseur de services principal lorsqu'il n'y a pas de fournisseurs de services tiers, de manière à conserver au moins un élément de données d'origine et une copie.

2. Système de disque infonuagique uni selon la revendication 1, dans lequel le système de disque infonuagique uni comprend en outre au moins l'une parmi : une interface entre les ressources de stockage et le serveur de disque infonuagique uni, une interface entre le fournisseur de services tiers de disque infonuagique uni et le serveur de disque infonuagique uni ou une interface entre le fournisseur de services tiers de disque infonuagique non uni et le serveur de disque infonuagique uni.

3. Système de disque infonuagique uni selon la revendication 1, dans lequel le système de disque infonuagique uni comprend en outre au moins l'une parmi : une interface entre le dispositif client de disque infonuagique uni et le serveur de disque infonuagique uni, une interface entre l'application et le serveur de disque infonuagique uni, une interface entre le moteur tiers et le serveur de disque infonuagique uni ou des interfaces entre d'autres serveurs de disque infonuagique uni et le serveur de disque infonuagique uni.

4. Système de disque infonuagique uni selon la revendication 2 ou 3, dans lequel chaque interface fournit au moins l'une des fonctions suivantes : une fonction d'authentification, une fonction d'autorisation, une fonction d'opération de gestion d'identificateur, une fonction d'opération de gestion de compte, une fonction d'opération de service de fichier, une fonction d'opération de service d'objet, une fonction d'opération de service de bloc, une fonction de notification, une fonction de demande ou une fonction de réponse.

5. Serveur de disque infonuagique uni inclus dans un fournisseur de services principal, comprenant au moins un module parmi un module de gestion d'identificateur, un module de gestion de compte, un module de service de fichier, un module de service d'objet et un module de service de bloc, dans lequel :
le module de gestion d'identificateur est configuré de manière à gérer des identificateurs d'utilisateurs ;
le module de gestion de compte est configuré de manière à gérer des métadonnées ou des informations d'attribution d'au moins l'un des comptes d'utilisateurs suivants : un compte de locataire, un compte sous-utilisateur de locataire ou un compte utilisateur de consommateur ;
le module de service de fichier est configuré de manière à fournir une gestion et/ou une utilisation d'un répertoire ou d'un fichier ;
le module de service d'objet est configuré de manière à fournir une gestion et/ou une utilisation d'un conteneur ou d'un objet ; et
le module de service de bloc est configuré de manière à fournir une gestion et/ou une utilisation d'un bloc de données ;
dans lequel au moins l'un parmi le module de service de fichier, le module de service d'objet ou le module de service de bloc est en outre configuré de manière à sauvegarder des données stockées dans un fichier, dans un objet ou dans un bloc, en faisant appel à l'un quelconque des modes suivants consistant à :
mode 1 : copier des données stockées par le fournisseur de services principal sur des ressources de stockage fournies par au moins deux autres fournisseurs de services tiers différents, ou copier les données dans deux autres emplacements physiques différents du fournisseur de services principal lorsqu'il n'y a pas de fournisseurs de services tiers, de manière à conserver au moins un élément de données d'origine et deux copies ;
mode 2 : copier les données sur des ressources de stockage fournies par au moins trois fournisseurs de services tiers différents, ou copier les données au niveau du fournisseur de services principal lorsqu'il n'y a pas de fournisseurs de services tiers, de manière à conserver au moins un élément de données d'origine et deux copies ;
mode 3 : copier les données stockées par le fournisseur de services principal sur des ressources de stockage fournies par au moins un autre fournisseur de services tiers, ou copier les données dans un autre emplacement physique du fournisseur de services principal lorsqu'il n'y a pas de fournisseurs de services tiers, de manière à conserver au moins un élément de données d'origine et une copie ;
mode 4 : stocker les données sur des ressources de stockage fournies par au moins deux fournisseurs de services tiers différents, ou copier les données au niveau du fournisseur de services principal lorsqu'il n'y a pas de fournisseurs de services tiers, de manière à conserver au moins un élément de données d'origine et une copie.

6. Serveur de disque infonuagique uni selon la revendication 5, dans lequel :
les métadonnées ou les informations d'attribution du compte de locataire comprennent au moins l'un des éléments suivants : un identificateur de compte principal de locataire, un mot de passe de compte principal de locataire, un jeton de compte principal de locataire, un identificateur de compte secondaire de locataire, un mot de passe de compte secondaire de locataire, un jeton de compte secondaire de locataire, un plan de facturation de locataire, une liste de fournisseurs de services tiers, un quota gratuit de disque infonuagique d'un fournisseur de services principal, un quota gratuit de disque infonuagique d'un fournisseur de services tiers, un quota facturable du fournisseur de services principal, un quota facturable du fournisseur de services tiers, des fonctions de service prises en charge, des stratégies de fournisseur de services principal, des stratégies de fournisseur de services tiers, des accords de niveau de service (SLA), des exigences de qualité de service (QoS), une liste de comptes sous-utilisateur de locataire, des stratégies de locataire ou des configurations des vues d'interface administrateur de locataire ;
les métadonnées ou les informations d'attribution du compte sous-utilisateur de locataire comprennent au moins l'un des éléments parmi : un identificateur de compte principal sous-utilisateur de locataire, un mot de passe de compte principal sous-utilisateur de locataire, un jeton de compte principal sous-utilisateur de locataire, un identificateur de compte secondaire sous-utilisateur de locataire, un mot de passe de compte secondaire sous-utilisateur de locataire, un jeton de compte secondaire sous-utilisateur de locataire, des configurations de vues d'interface sous-utilisateur de locataire, une liste de fournisseurs de services tiers, un quota de disque infonuagique d'un fournisseur de services principal, un quota de disque infonuagique d'un fournisseur de services tiers, des fonctions de service prises en charge, des préférences sous-utilisateur de locataire, des stratégies de locataire, des modes d'accès ou des types de terminaux pris en charge ; et
les métadonnées ou les informations d'attribution du compte utilisateur de consommateur comprennent au moins l'un des éléments parmi : un identificateur de compte principal utilisateur de consommateur, un mot de passe de compte principal utilisateur de consommateur, un jeton de compte principal utilisateur de consommateur, un identificateur de compte secondaire utilisateur de consommateur, un mot de passe de compte secondaire utilisateur de consommateur, un jeton de compte secondaire utilisateur de consommateur, des configurations de vues d'interface utilisateur de consommateur, un plan de facturation utilisateur de consommateur, une liste de fournisseurs de services tiers, un quota gratuit de disque infonuagique d'un fournisseur de services principal, un quota gratuit de disque infonuagique d'un fournisseur de services tiers, un quota facturable du fournisseur de services principal, un quota facturable du fournisseur de services tiers, des fonctions de service prises en charge, des préférences utilisateur, des stratégies de fournisseur de services principal, des stratégies de fournisseur de services tiers, des accords SLA, des exigences de qualité QoS, des modes d'accès ou des types de terminaux pris en charge.

7. Serveur de disque infonuagique uni selon la revendication 5, dans lequel
l'étape de fourniture de gestion du fichier par le module de service de fichier comprend l'étape dans laquelle : le module de service de fichier gère les métadonnées ou les informations d'attribution du fichier ;
les métadonnées ou les informations d'attribution du fichier comprennent au moins l'un des éléments parmi : un nom de fichier, un identificateur de fichier, un type de fichier, un mode d'affichage de fichier, un mode de lecture de fichier, une description de fichier, une permission de fichier, une taille de fichier, un code de vérification, une date de création de fichier, une date de modification de fichier, une date de dernière lecture de fichier, une icône de fichier, des liens de ressources de fichier d'un fournisseur de services principal, des liens de ressources de fichier d'un fournisseur de services tiers, ou un propriétaire de fichier.

8. Serveur de disque infonuagique uni selon la revendication 5, dans lequel
le fichier est un fichier volumineux, et la fourniture de la gestion du fichier par le module de service de fichier comprend l'étape dans laquelle : le module de service de fichier fournit la gestion de métadonnées ou d'informations d'attribution du fichier volumineux ;
le fichier volumineux est un fichier dont la taille est supérieure à une taille prédéterminée ; les métadonnées ou les informations d'attribution du fichier volumineux comprennent au moins l'un des éléments parmi : un nom de fichier, un identificateur de fichier, un type de fichier, un mode d'affichage / de lecture de fichier, une description de fichier, une permission de fichier, une taille de fichier, un code de vérification, une date de création de fichier, une date de modification de fichier, une date de dernière lecture de fichier, une icône de fichier, un propriétaire de fichier, ou index de fragmentation de fichier volumineux.

9. Serveur de disque infonuagique uni selon la revendication 5, dans lequel
l'étape de fourniture de gestion de l'objet par le module de service d'objet comprend l'étape dans laquelle : le module de service d'objet gère les métadonnées ou les informations d'attribution de l'objet ;
les métadonnées ou les informations d'attribution de l'objet comprennent au moins l'un des éléments parmi : un nom d'objet, un identificateur d'objet, un type d'objet, une description d'objet, une permission d'objet, une taille d'objet, un code de vérification, un mode d'interface d'objet, une valeur d'objet, une date de création d'objet, une date de modification d'objet, une date de dernière lecture d'objet, des liens de ressources d'objet d'un fournisseur de services principal, des liens de ressources d'objet d'un fournisseur de services tiers, ou un propriétaire d'objet ;
l'étape de fourniture de gestion du conteneur par le module de service d'objet comprend l'étape dans laquelle : le module de service d'objet gère les métadonnées ou les informations d'attribution du conteneur ;
les métadonnées ou les informations d'attribution du conteneur comprennent au moins l'un des éléments parmi : un nom de conteneur, un identificateur de conteneur, une permission de conteneur, un espace de conteneur, une liste de conteneurs parents, une liste de conteneurs enfants ou une liste d'objets.

10. Serveur de disque infonuagique uni selon la revendication 5, dans lequel
l'étape de fourniture de gestion du bloc de données par le module de service de bloc comprend l'étape dans laquelle : le module de service de bloc gère les métadonnées ou les informations d'attribution du bloc ;
les métadonnées ou les informations d'attribution du bloc comprennent au moins l'un des éléments parmi : un identificateur de bloc, une description de bloc, une permission de bloc, une taille de bloc, un code de vérification, un mode d'interface de bloc, une date de création de bloc, une date de modification de bloc, un date de dernière lecture de bloc, des liens de ressources de bloc d'un fournisseur de services principal, des liens de ressources de bloc d'un fournisseur de services tiers, ou un propriétaire de bloc.

11. Procédé de service de disque infonuagique uni, comprenant les étapes ci-dessous consistant à :
recevoir, par le biais d'un serveur de disque infonuagique uni, une demande de services de disque infonuagique transmise par un dispositif client de disque infonuagique uni, une application, un moteur tiers ou un fournisseur de services tiers ; et
traiter, par le biais du serveur de disque infonuagique uni, la demande de services de disque infonuagique, et appeler des ressources de stockage du fournisseur de services principal et/ou du fournisseur de services tiers pour fournir des services de disque infonuagique uni ;
dans lequel les services de disque infonuagique uni comprennent au moins l'un parmi : des services de compte, des services de répertoire, des services de dossier, des services de conteneur, des services de fichier, des services d'objet, des services de bloc, le partage, la lecture en ligne, le téléchargement hors ligne, le chargement/téléchargement par des utilisateurs de disques non infonuagiques, ou la recherche ;
dans lequel le procédé comprend en outre l'étape consistant à :
sauvegarder, par le biais du serveur de disque infonuagique uni, des données stockées dans un fichier, dans un objet ou dans un bloc, en faisant appel à l'un des modes suivants :
mode 1 : copier des données stockées par le fournisseur de services principal sur des ressources de stockage fournies par au moins deux autres fournisseurs de services tiers différents, ou copier les données dans deux autres emplacements physiques différents du fournisseur de services principal lorsqu'il n'y a pas de fournisseurs de services tiers, de manière à conserver au moins un élément de données d'origine et deux copies ;
mode 2 : copier les données sur des ressources de stockage fournies par au moins trois fournisseurs de services tiers différents, ou copier les données au niveau du fournisseur de services principal lorsqu'il n'y a pas de fournisseurs de services tiers, de manière à conserver au moins un élément de données d'origine et deux copies ;
mode 3 : copier les données stockées par le fournisseur de services principal sur des ressources de stockage fournies par au moins un autre fournisseur de services tiers, ou copier les données dans un autre emplacement physique du fournisseur de services principal lorsqu'il n'y a pas de fournisseurs de services tiers, de manière à conserver au moins un élément de données d'origine et une copie ;
mode 4 : stocker les données sur des ressources de stockage fournies par au moins deux fournisseurs de services tiers différents, ou copier les données au niveau du fournisseur de services principal lorsqu'il n'y a pas de fournisseurs de services tiers, de manière à conserver au moins un élément de données d'origine et une copie.
